# EUROPÄISCHE PATENTSCHRIFT

(11) **EP 3 372 065 B1**
(45) Veröffentlichungstag und Bekanntmachung des Hinweises auf die Patenterteilung: **22.04.2020**
(21) Anmeldenummer: 18159394.8
(22) Anmeldetag: 01.03.2018
(51) Int. Cl.: A01C 7/08

(54) **VERTEILERTURM EINER LANDWIRTSCHAFTLICHEN MASCHINE, LANDWIRTSCHAFTLICHE MASCHINE UND VERFAHREN ZUM BETREIBEN EINER SOLCHEN LANDWIRTSCHAFTLICHEN MASCHINE**
AGRICULTURAL MACHINE AND METHOD FOR OPERATING AN AGRICULTURAL MACHINE, DISTRIBUTOR TOWER OF AN AGRICULTURAL MACHINE
TOUR DE DISTRIBUTION D'UNE MACHINE AGRICOLE, MACHINE AGRICOLE ET PROCÉDÉ DE FONCTIONNEMENT D'UNE TELLE MACHINE AGRICOLE

(30) Priorität: 08.03.2017 DE 102017203857
(43) Veröffentlichungstag der Anmeldung: 12.09.2018
(73) Patentinhaber: Horsch Maschinen GmbH, 92421 Schwandorf (DE)
(72) Erfinder: PIRKENSEER, Michael, 92421 Schwandorf (DE)
(74) Vertreter: Benninger, Johannes

(56) Entgegenhaltungen:
- EP-A1- 3 284 332
- EP-A2- 0 799 560
- DE-A1-102009 026 332

## Beschreibung

Die vorliegende Erfindung betrifft einen Verteilerturm für eine landwirtschaftliche Maschine zum Ausbringen von Verteilgut mit den Merkmalen des unabhängigen Anspruchs 1. Zudem betrifft die Erfindung ein Verfahren zum Betreiben einer landwirtschaftlichen Maschine zum Ausbringen von Verteilgut mit den Merkmalen des unabhängigen Anspruchs 10. Weiterhin betrifft die Erfindung eine landwirtschaftliche Maschine zum Ausbringen von Verteilgut mit den Merkmalen des Anspruchs 13.

Im landwirtschaftlichen Bereich kommen in der Praxis verschiedene landwirtschaftliche Maschinen zum Ausbringen und Verteilen von Verteilgut, wie beispielsweise Saatgut oder Dünger auf einem Feld zum Einsatz. Aus dem Stand der Technik ist bekannt, dass das Verteilgut in einem Vorratstank gelagert und von der landwirtschaftlichen Maschine mitgeführt wird. Das Verteilgut wird jeweils über eine Dosiervorrichtung aus dem Vorratstank entnommen, welche Dosiervorrichtung direkt unterhalb des Vorratstanks angeordnet ist. Das aus dem Vorratstank entnommene Verteilgut wird anschließend mit einem Luftstrom vermischt, so dass ein Verteilgut-Luftvolumenstrom gebildet wird. Der Luftstrom wird in der Regel von einem Gebläse erzeugt. Der gebildete Verteilgut-Luftvolumenstrom wird zunächst entlang einer Leitung bis zu einem Verteilerturm befördert, wodurch der Verteilgut-Luftvolumenstrom entsprechend der am Verteilerkopf des Verteilerturms vorgesehenen Abgänge in eine Vielzahl von Verteilgut-Luftvolumenströme aufgeteilt wird. Die einzelnen Verteilgut-Luftvolumenströme werden anschließend über Saatleitungen zu Ausbringelementen befördert, wodurch das Verteilgut in den Boden abgelegt werden kann.

Um eine möglichst gleichmäßige Verteilung des Verteilguts an allen Ausbringelementen zu erreichen, muss der Verteilerturm eine möglichst konstante Querverteilung und damit einen möglichst geringen Variationskoeffizienten an den einzelnen Abgängen aufweisen. In der Regel ist die Querverteilung umso konstanter, je konstanter die Luftvolumenströme, die Drücke sowie die Strömungsgeschwindigkeiten im Verteilerturm sind. Eine konstante Querverteilung wird in der Regel meist dann erreicht, sofern das Verteilgut über alle Abgänge an die Ausbringelemente befördert wird und sofern die Saatleitungen längenmäßig aufeinander abgestimmt sind. Beim Anlegen von Fahrgassen oder um ein Überlappen von Verteilgut beim Ausbringen auf das Feld zu vermeiden, ist es oftmals erforderlich, einzelne Abgänge des Verteilerturms mittels zumindest eines Absperrmittels abzusperren, was sich negativ auf eine konstante Querverteilung auswirken kann. Das Verteilgut wird in einem solchen Fall in das Steigrohr oder in eine dem Steigrohr vorgeordnete Leitung zurückgeführt.

Durch die DE 10 2005 038 216 A1 wird ein Verteilerturm beschrieben, bei welchem die Abgänge jeweils mittels eines Schiebers verschlossen und/oder geöffnet werden können. Durch das Abschalten einzelner Abgänge können in den offenen Abgängen zu hohe Strömungsgeschwindigkeiten hervorgerufen werden, was eine schlechtere Querverteilung beim Ausbringen des Verteilguts zur Folge haben kann. Die zu hohen Strömungsgeschwindigkeiten ließen sich zwar durch eine Verringerung des Luftvolumenstroms vermeiden. Jedoch bestehen dadurch die Nachteile, dass der Luftvolumenstrom womöglich zu gering ist, um das Verteilgut transportieren zu können, sowie dass der Verteilerturm durch das Verteilgut verstopft.

Durch die nachveröffentlichte EP 3 284 332 A1 ist ein Verteilerturm offenbart, welcher an seinem oberen Ende einen Verteilerkopf aufweist, an dessen Umfang eine Vielzahl von Abgängen angeordnet sind, so dass der Verteilgutluftvolumenstrom in eine Mehrzahl von einzelnen Verteilgutluftvolumenströmen aufgeteilt wird. Von den Abgängen führt jeweils eine Saatleitung in Richtung der Säschare. Zwischen dem Abgang und der Saatleitung ist eine Weiche angeordnet. Bei geöffneter Weiche wird der einzelne Verteilgutluftvolumenstrom in Richtung Säschare geleitet, während bei geschlossener Weiche der Verteilgutluftvolumenstrom einem Rückführbereich zugeführt wird, so dass der einzelne Verteilgutluftvolumenstrom in das Steigrohr des Verteilerturms zurückgeführt wird.

Durch die DE 10 2009 026 332 A1 ist ein Verteiler für eine pneumatische Verteilmaschine offenbart. Über den Verteilerkopf wird das über das Steigrohr ankommende Verteilgut auf Verteilerleitungen aufgeteilt, welche in Ausbringorganen münden. Dem Verteilerkopf ist ein Absperrschieber zugeordnet, der von unten in den Verteilerraum des Verteilerkopfs einschiebbar ist und herausschiebbar ist. In eingeschobener Position wird eine Halbseite des Verteilerkopfes mittels des Absperrschiebers blockiert bzw. abgesperrt.

Durch die EP 0 799 560 A2 bzw. EP 0 799 560 B1 und durch die DE 196 13 785 C2 ist jeweils ein Verteilerturm offenbart, bei welchem jedem Abgang ein Absperrmittel zugeordnet ist, so dass der Verteilgut-Luftvolumenstrom je nach Stellung des Absperrmittels entweder an eine Saatleitung und eine Rückführleitung geleitet wird. Um bei der Umlenkung des Verteilgut-Luftvolumenstroms den Luftvolumenstrom entweichen lassen zu können, ist zwischen der Saatleitung und der Rückführleitung ein Bypass vorgesehen. Damit soll erreicht werden, dass weder die Verteilgutmenge noch der Luftvolumenstrom beim Abschalten einzelner Abgänge verringert werden müssen. Die Rückführleitung mündet in einem separaten Sammler für das Verteilgut, was sich jedoch als teileaufwändig und kostenintensiv herausgestellt hat. Darüber hinaus ist bei einem derartigen Verteilerturm erforderlich, dass in der Rückführleitung ein Rückstaudruck vorherrschen muss, damit der Luftvolumenstrom bei einer Rückführung des Verteilguts in den Sammler über den Bypass entweichen kann. Bei einem zu groß gewählten Rückstaudruck besteht hingegen die Gefahr, dass neben dem Luftvolumenstrom auch das Verteilgut über den Bypass entweichen kann. Damit herrschen ebenso bei diesem Verteilerturm keine konstanten Druckniveaus und Luftvolumenströme, was sich durch eine schlechtere Querverteilung widerspiegelt. Darüber hinaus ist es mit diesem System nicht möglich, ein Saatgut-Düngergemisch zu verarbeiten.

Durch die EP 0 642 729 A1 ist ein weiterer Verteilerturm offenbart, bei welchem ein Verteilgut-Luftvolumenstrom je nach Stellung eines Absperrmittels eine Saatleitung oder eine Rückführleitung passiert. Die Rückführleitung mündet im Steigrohr des Verteilerkopfs. Da gemäß der vorliegenden EP-Anmeldung neben dem Verteilgut auch der Luftvolumenstrom in die Steigleitung zurückgeführt wird, muss neben der Verteilgutmenge auch der Luftvolumenstrom deutlich verringert werden, damit das Verteilgut über den Verteilerturm überhaupt ausgebracht werden kann. Die Verringerung des Luftvolumenstroms bringt die Nachteile mit sich, dass im Verteilerturm unterschiedliche Drücke herrschen, was sich in einer schlechten Querverteilung widerspiegelt. Eine Luftabscheidung über einen Bypass, wie es beispielsweise in der EP 0 799 560 B1 offenbart ist, erfolgt bei diesem System nicht.

Eine Weiterbildung der EP 0 642 729 A1 beschreibt die EP 2 695 508 B1. Um die Rückführung des Verteilguts in das Steigrohr zu erleichtern, sind die bisher bekannten einzelnen Rückführleitungen durch ein trichterförmiges Element ersetzt worden. Da bei der EP 2 695 508 B1 ebenfalls keine Luftabscheidung über einen Bypass erfolgt, müssen bei der Rückführung des Verteilguts in das Steigrohr sowohl die Verteilgutmenge als auch der Luftvolumenstrom deutlich reduziert werden, was jedoch unterschiedliche Drücke im Verteilerturm und damit eine schlechtere Querverteilung zur Folgen haben.

Durch die DE 10 2015 116 378 A1 ist ein weiterer Verteilerturm einer landwirtschaftlichen Verteilmaschine offenbart, bei welchem der Verteilgut-Luftvolumenstrom über eine Saatleitung zu Ausbringelementen oder über einen Rückführbereich bzw. eine Rückführleitung zum Steigrohr zurückgeführt wird. Die Transportrichtung des Verteilgutluftvolumenstroms wird über eine Weiche beispielsweise in Form von einer verschwenkbaren Klappe vorgegeben, welche wahlweise den Saatleitungsanschluss oder den Rückführbereich bzw. die Rückführleitung versperrt, so dass je nach Stellung der Weiche der Verteilgutluftvolumenstrom zu den Ausbringelementen oder zum Steigrohr befördert wird. Der Saatleitungsanschluss und der Rückführbereich sind durch einen Bypass pneumatisch miteinander verbunden. Nachteilig jedoch ist, dass durch den abgezweigten Luftvolumenstrom, welcher entlang dem Bypass vom Saatleitungsanschluss zum Rückführbereich und umgekehrt strömt, auch Verteilgut mitgerissen wird.

Weitere Verteiltürme sind in der DE 41 06 711 C1 und in der DE 10 2013 014 386 A1 offenbart.

Ein weiteres Problem bei den aus dem Stand der Technik bekannten Verteilertürmen besteht darin, dass die Querverteilung des Verteilguts je nach Länge der sich an den Verteilerturm anschließenden und zu den Säscharen führenden Saatgutleitungen variieren kann. Hintergrund ist, dass sich je nach Saatleitungslänge die Strömungsgeschwindigkeiten in den jeweiligen Saatleitungen ändern. Um dieses Problem zu vermeiden, wurde bisher versucht, die Saatleitungen möglichst mit gleichen Längen auszubilden, was jedoch bei landwirtschaftlichen Maschinen mit großer Arbeitsbreite kaum umzusetzen ist.

Eine vorrangige Aufgabe der Erfindung kann daher darin gesehen werden, einen Verteilerturm für eine landwirtschaftlichen Maschine zur Verfügung zu stellen, bei welchen jeweils die Querverteilung und die im Verteilerturm vorherrschenden Drücke zu jedem Zeitpunkt weitgehend konstant bleiben. Zudem soll das Entweichen des Luftvolumenstroms über den Bypass gegenüber dem Stand der Technik verbessert bzw. optimiert werden. Weiterhin soll eine landwirtschaftliche Maschine und ein Verfahren zum Betreiben einer solchen landwirtschaftlichen Maschine zur Verfügung gestellt werden, bei welchem die im Stand der Technik bekannten Nachteile zumindest weitgehend überwunden werden können.

Diese Aufgaben werden durch einen Verteilerturm einer landwirtschaftlichen Maschine zum Ausbringen von Verteilgut mit den Merkmalen des Anspruchs 1, durch ein Verfahren zum Betreiben einer solchen landwirtschaftlichen Maschine zum Ausbringen von Verteilgut mit den Merkmalen des Anspruchs 10 sowie durch eine landwirtschaftliche Maschine zum Ausbringen von Verteilgut mit zumindest einem Verteilerturm mit den Merkmalen des Anspruchs 113 gelöst. Weitere vorteilhafte Ausgestaltungen und Ausführungsformen werden in den abhängigen Ansprüchen beschrieben.

Die vorliegende Erfindung betrifft einen Verteilerturm für eine landwirtschaftliche Maschine zum Ausbringen von Verteilgut. Wenn im vorliegenden Zusammenhang von Verteilgut die Rede ist, so kann dies beispielsweise Saatgut oder Dünger oder dergleichen granulatartiges Gut sein. Auch Mischungen von Saatgut und Dünger sollen unter den Begriff des Verteilgutes im Sinne der vorliegenden Erfindung fallen. Die landwirtschaftliche Maschine, die insbesondere eine Verteilmaschine oder eine Sämaschine sein kann, ist mit mindestens einem Vorratstank für Verteilgut ausgestattet, aus dem das Verteilgut auf pneumatische Weise zum Verteilerturm befördert wird. Wahlweise können auch zwei oder mehr separate Vorratsbehälter vorgesehen sein, so dass bspw. variabel einstellbare Mischungen aus Saatgut und Dünger ausgebracht und in gemischter Form mittels pneumatischer Förderung zum Verteilerturm gefördert werden können.

Der Vorratstank kann insbesondere trichterförmig ausgebildet sein, wobei am tiefsten Punkt des Vorratstanks eine Dosiervorrichtung vorgesehen sein ist. Der Dosiervorrichtung kann in Strömungsrichtung ein Gebläse vorgeordnet sein, welches in einer Leitung einen Luftvolumenstrom erzeugt. Die Dosiervorrichtung kann aus dem Vorratstank eine gewünschte Menge an Verteilgut entnehmen und es der Leitung zuführen, so dass sich das aus dem Vorratstank entnommene Verteilgut mit dem Luftvolumenstrom vermischt, woraus resultierend ein Verteilgut-Luftvolumenstrom gebildet wird. Mit Hilfe des Luftvolumenstroms kann das Verteilgut entlang der Leitung bis zu einem Verteilerturm transportiert werden, so dass das Verteilgut anschließend über mindestens eine Saatleitung zu bodennah angeordneten und/oder zu im Boden geführten Ausbringelementen geführt wird. Die Leitung kann dem Steigrohr vorgeordnet sein. Vorzugsweise kann die Leitung einen zumindest weitgehend horizontalen Verlauf und einen sich an den horizontalen Verlauf in senkrechte Richtung anschließenden Krümmungsverlauf umfassen. Die Leitung kann einen zumindest weitgehend gleichen Querschnitt aufweisen, welcher zylindrisch ausgebildet ist.

Der Verteilerturm umfasst ein Steigrohr zum Zuführen eines Verteilgut-Luftvolumenstroms in einen sich an das Steigrohr anschließenden und insbesondere als Bestandteil des Verteilerturms ausgebildeten Verteilerkopf. Normalerweise ist der Verteilerkopf integraler Bestandteil des Verteilerturms und schließt an dessen Oberseite an das Steigrohr an, was jedoch nicht die einzige denkbare Bauform darstellt, so dass die Erfindung auch solche Verteilertürme umfassen soll, bei denen der Verteilerkopf kein bauliches Bestandteil des Verteilerturmes bildet bzw. nicht unmittelbar und/oder baulich mit diesem zusammengefasst ist. Das Steigrohr kann einen ungefähr vertikalen Verlauf oder einen leicht gegenüber einer vertikalen Achse geneigten Verlauf aufweisen. Vorzugsweise kann das Steigrohr mehrere Abschnitte umfassen. In einem ersten Abschnitt kann das Steigrohr eine Düse aufweisen, mittels welcher eine zumindest bereichsweise Querschnittsverengung des Steigrohrs ausgebildet wird. An die zumindest bereichsweise Querschnittsverengung des ersten Abschnitts kann sich in einem zweiten bzw. weiteren Abschnitt ein Diffusor anschließen, mittels welchem eine zumindest bereichsweise Querschnittserweiterung ausgebildet wird. An die zumindest bereichsweise Querschnittserweiterung des zweiten Abschnitts kann sich ein dritter bzw. ein weiterer Abschnitt beispielsweise in Form eines Wellrohrs anschließen, welches Wellrohr entlang seiner Längserstreckungsrichtung unterschiedliche Querschnitte aufweist. Das Steigrohr mündet in den Verteilerkopf, welcher ringförmig ausgebildet sein kann. Der Verteilerkopf kann eine pilzkopfförmige Deckelfläche, eine flache Deckelfläche oder eine kegelige Deckelfläche oder dergleichen aufweisen. Der durch das Steigrohr bewegte Verteilgut-Luftvolumenstrom kann von unten gegen den Deckel des Verteilerkopfes prallen und von einer senkrechten Richtung und in eine zumindest weitgehend waagrechte Richtung umgelenkt werden.

Es sei an dieser Stelle ausdrücklich erwähnt, dass die Erfindung auch eine sog. kinematische Umkehrung umfassen soll, bei welcher anstelle eines Steigrohres ein Fallrohr vorgesehen ist, an dessen Unterseite der untenliegende Verteilerkopf anschließt, von dem zahlreiche Saatleitungen abzweigen. Ebenso soll die Erfindung Varianten mit schrägen Steig- oder Fallrohren umfassen, die in einen passend positionierten Verteilerkopf münden, dessen Verzweigungen nicht zwingend symmetrisch zu einer vertikalen Achse angeordnet sind, sondern die ggf. symmetrisch zu einer gegenüber einer Vertikalen geneigten Achse verlaufen bzw. abzweigen können. Wenn daher nachfolgend und/oder im Zusammenhang mit der gesamten Beschreibung und/oder den Ansprüchen von einem Steigrohr und/oder einem obenliegenden Verteilerkopf die Rede ist, so umfasst dies ebenfalls alternative Bauformen mit Fallrohr und untenliegendem Verteilerkopf sowie die weiteren alternativen Bauformen mit horizontalem oder geneigtem Förderrohr (anstelle eines sog. Steig- oder Fallrohres), an das sich ein Verteilerkopf mit einer Mehrzahl oder Vielzahl von Abzweigungen für die Saatleitungen anschließen kann.

Der Verteilerturm umfasst eine Vielzahl von Abgängen oder Abzweigungen am Verteilerkopf zur Aufteilung des Verteilgut-Luftvolumenstroms in eine Vielzahl von Verteilgut-Luftvolumenströmen. Beispielsweise kann der Verteilgut-Luftvolumenstrom zunächst eine Richtungsumkehr aus einer zumindest weitestgehend vertikalen Bewegung entlang der Längserstreckungsrichtung des Steigrohrs in eine zumindest weitgehend waagrechte Bewegung in Richtung der Abgänge erfahren, indem das Verteilgut weitgehend senkrecht von unten am Deckel des Verteilerkopfes abprallt und durch den Luftvolumenstrom in Richtung der Abgänge geleitet wird. Die Abgänge verzweigen sich jeweils in mindestens eine Saatleitung und in mindestens eine Rückführeinrichtung und/oder Rückführleitung. Die einzelnen Abgänge können in einem gleichmäßigen Abstand am Umfang des Verteilerkopfs angeordnet sein und zwar insbesondere in konzentrischer Anordnung. Je gleichmäßiger die Anordnung der Abgänge am Umfang des Verteilerkopfes ist, desto gleichmäßiger kann die Querverteilung des Verteilguts des Verteilerturms ausgebildet sein. Die Querverteilung kann unter anderem von den Strömungsgeschwindigkeiten in den jeweiligen Abgängen abhängen. Die Abgänge verzweigen sich jeweils in mindestens eine Saatleitung und in mindestens eine Rückführeinrichtung, die insbesondere durch eine Rückführleitung gebildet sein kann. Wahlweise kann die Rückführeinrichtung anstelle einer Rückführleitung auch einen gemeinsamen Rückführtrichter umfassen bzw. durch einen Rückführtrichter gebildet sein, in den die Verzweigungen münden. Der Rückführtrichter kann das Steigrohr koaxial umgeben. Die mindestens eine Saatleitung und die mindestens eine Rückführeinrichtung bzw. Rückführleitung können winkelig zueinander angeordnet sein. Ein Winkel zwischen der mindestens einen Saatleitung und der mindestens einen Rückführeinrichtung bzw. Rückführleitung kann bspw. zwischen 50° und 100° betragen. Vorzugsweise können die mindestens eine Saatleitung und die mindestens eine Rückführeinrichtung bzw. Rückführleitung auch ungefähr rechtwinkelig zueinander angeordnet sein.

Beispielsweise kann die mindestens eine Saatleitung in bodennah angeordneten oder im Boden geführten Ausbringelementen münden, so dass das Verteilgut auf das Feld ausgebracht werden kann. Die mindestens eine Rückführeinrichtung bzw. die Rückführleitungen können allesamt in einen Sammelbehälter, der in etwa in selber Höhe wie der erste Abschnitt bzw. die Düse des Steigrohrs platziert ist, in das Steigrohr münden, so dass das Verteilgut zurückgeführt wird und wieder in das Steigrohr eingespeist werden kann.

Der Verteilerturm umfasst weiter zumindest ein Absperrmittel, mittels welches wahlweise die mindestens eine Saatleitung oder die mindestens eine Rückführeinrichtung bzw. Rückführleitung absperrbar bzw. mit dem Verteilgut-Luftvolumenstrom beaufschlagbar ist, so dass der Verteilgut-Luftvolumenstrom in Abhängigkeit von der jeweiligen Schaltstellung des zumindest einen Absperrmittels wahlweise entlang der mindestens einen Saatleitung oder der mindestens einen Rückführleitung bzw. der Rückführeinrichtung wie bspw. des gemeinsamen Rückführtrichters bewegbar oder leitbar ist. Damit kann mittels der jeweils gewählten Schaltstellung des zumindest einen Absperrmittels bestimmt werden, wohin der Verteilgut-Luftvolumenstrom umgeleitet wird; d.h. der jeweilige Verteilgut-Luftvolumenstrom in den Abgängen kann mittels des zumindest einen Absperrmittels eingestellt und entsprechend gesteuert werden.

Normalerweise kann jedem Abgang ein Absperrmittel zugeordnet sein. Es kann jedoch auch genügen, nur einzelnen von mehreren Abgängen jeweils separate Absperrmittel zuzuordnen, um beispielsweise definierte Fahrgassenschaltungen durch variables Absperren oder Freigeben bestimmter Saatleitungen zu ermöglichen.

Der Verteilerturm umfasst weiter zumindest einen Bypasskanal oder einen Bypass, welcher die mindestens eine Saatleitung und die mindestens eine Rückführeinrichtung bzw. Rückführleitung pneumatisch miteinander verbindet und/oder über welchem vom Verteilgut-Luftvolumenstrom ein definierbarer und/oder variabler Luftvolumenstrom abzweigbar ist. Damit kann durch den Bypass unabhängig von der Stellung des Absperrmittels ein Druckausgleich im Verteilerturm erfolgen. Die pneumatische Verbindung der mindestens einen Saatleitung und der mindestens einen Rückführeinrichtung bzw. Rückführleitung kann damit über einen Luftvolumenstromanteil erfolgen, welcher jeweils vom beförderten Verteilgut-Luftvolumenstrom in der mindestens einen Saatleitung und/oder in der mindestens einen Rückführeinrichtung bzw. Rückführleitung abzweigbar ist. Der Bypass oder Bypasskanal kann als Luftkanal und/oder als Rohr- und/oder als Schlauchleitung ausgebildet sein. Der Bypasskanal kann sich zumindest abschnittsweise entlang der mindestens einen Saatleitung und/oder entlang der mindestens einen Rückführeinrichtung bzw. Rückführleitung und/oder zumindest abschnittsweise quer zur mindestens einen Saatleitung und zur mindestens einen Rückführeinrichtung bzw. Rückführleitung erstrecken.

Dem Bypasskanal ist an einer Einmündung in die mindestens eine Saatleitung und/oder in die mindestens eine Rückführeinrichtung bzw. Rückführleitung ein strömungsleitendes Element zugeordnet, über welches ein Luftvolumenstromanteil abzweigbar ist. Damit kann das strömungsleitende Element jeweils in einem Übergangsbereich bzw. in einem Wandabschnitt zwischen der mindestens einen Saatleitung bzw. der mindestens einen Rückführeinrichtung bzw. Rückführleitung und dem Bypasskanal angeordnet sein. Das strömungsleitende Element kann sich vollständig und/oder teilweise über die Einmündung des Bypasskanals in die mindestens eine Saatleitung und/oder in die mindestens eine Rückführeinrichtung bzw. Rückführleitung erstrecken.

Bei einer offenen Schaltstellung des zumindest einen Absperrmittels kann der jeweilige abgezweigte Verteilgut-Luftvolumenstrom vom Abgang über die mindestens eine Saatleitung in Richtung zu den Ausbringelementen bzw. zu den Reihen und/oder Säscharen befördert werden, während die mindestens eine Rückführeinrichtung bzw. Rückführleitung durch das zumindest eine Absperrmittel und damit für eine Rückführung von Verteilgut in den Verteilerturm versperrt bzw. blockiert ist. Das wenigstens eine Absperrmittel kann einen Abscheider bzw. einen Abscheidebereich ausbilden, so dass ein Luftvolumenstromanteil des in Richtung der mindestens einen Saatleitung bewegten Verteilgut-Luftvolumenstroms abgezweigt werden kann. Das zumindest eine Absperrmittel kann einen Abscheider bzw. einen Abscheidebereich ausbilden, so dass ein Luftvolumenstromanteil des in Richtung der mindestens einen Saatleitung bewegten Verteilgut-Luftvolumenstroms abgezweigt werden kann. Dieser Luftvolumenstromanteil kann über den Bypasskanal in die mindestens eine Rückführeinrichtung bzw. Rückführleitung geleitet werden. Dadurch können die im Verteilerturm vorherrschenden Drücke unabhängig von der Anzahl an geöffneten Abgängen zumindest weitgehend aufrechterhalten werden.

Bei einer geschlossenen Schaltstellung des zumindest einen Absperrmittels kann der jeweilige Verteilgut-Luftvolumenstrom vom Abgang über die mindestens eine Rückführeinrichtung bzw. Rückführleitung in das Steigrohr oder einer dem Steigrohr vorgeordneten Leitung des Verteilerturms zurückgeführt werden, während die mindestens eine Saatleitung durch das zumindest eine Absperrmittel und damit für den Verteilgut-Luftvolumenstrom versperrt bzw. blockiert ist. Das zumindest eine Absperrmittel kann bspw. einen Abscheider bzw. einen Abscheidebereich ausbilden, so dass ein Luftvolumenstromanteil des zur mindestens einen Rückführeinrichtung bewegten Verteilgut-Luftvolumenstroms abgezweigt werden kann. Dieser Luftvolumenstromanteil kann über den Bypasskanal in die mindestens eine Saatleitung geleitet werden. Damit können die im Verteilerturm vorherrschenden Drücke unabhängig von der Anzahl an geöffneten Abgängen zumindest weitgehend aufrechterhalten werden.

Es kann vorgesehen sein, dass das strömungsleitende Element durch wenigstens einen Steg ausgebildet ist, so dass der abgezweigte Luftvolumenstromanteil des Verteilgut-Luftvolumenstroms den wenigstens einen Steg zumindest teilweise umströmt. Damit kann der wenigstens eine Steg einen Abscheider bzw. einen Abscheidebereich, beispielsweise in Form eines Umlenkabscheiders, ausbilden, so dass durch das wenigstens eine strömungsleitende Element zumindest weitgehend eine Trennung zwischen dem Verteilgut und dem Luftvolumenstrom erfolgt und dass das Verteilgut je nach Stellung des zumindest einen Absperrmittels zu einem hohen Anteil in die mindestens eine Rückführeinrichtung bzw. Rückführleitung oder in die mindestens eine Saatleitung strömt, während ein Luftvolumenstromanteil über den Bypasskanal in die mindestens eine Saatleitung oder in die mindestens eine Rückführeinrichtung bzw. Rückführleitung strömt. Damit kann das wenigstens eine strömungsleitende Element dazu beitragen, dass das Verteilgut nicht über den Bypasskanal ungewollt in die mindestens eine Saatleitung oder in die mindestens eine Rückführeinrichtung bzw. Rückführleitung gelangt sowie dass eine Blockade des Bypasskanals durch angestautes Verteilgut zumindest weitgehend unterbunden und/oder vermieden wird.

Wahlweise kann das strömungsleitende Element eine Vielzahl an Öffnungen umfassen, so dass der Verteilgut-Luftvolumenstrom über die Öffnungen in den Bypasskanal strömen kann. Diese Öffnungen sind sinnvollerweise jeweils kleiner als eine Korngröße des ausgebrachten bzw. auszubringenden Verteilgutes.

An das strömungsleitende Element schließt sich ein für Strömungsluft zumindest teilweise durchlässiges Element wie bspw. ein Lochblech an, so dass der Luftvolumenstromanteil des Verteilgut-Luftvolumenstroms über die Vielzahl an Öffnungen des für Strömungsluft zumindest teilweise durchlässigen Elementes bzw. des Lochblechs in den Bypasskanal strömen kann. Das zumindest teilweise für die Strömungsluft durchlässige Element kann sich zumindest teilweise oder vollständig über die Einmündung des Bypasskanals in die mindestens eine Saatleitung erstrecken. Das für Strömungsluft zumindest teilweise durchlässige Element bzw. das Lochblech kann eine Vielzahl an Öffnungen umfassen, so dass der Luftvolumenstromanteil des Verteilgut-Luftvolumenstroms über die Vielzahl an Öffnungen in den Bypasskanal strömen kann. Die Öffnungen können bzw. durch Schlitze oder Bohrungen oder dergleichen ausgebildet sein, wobei die Öffnungen jeweils so ausgebildet sind, dass der Luftvolumenstromanteil des Verteilgut-Luftvolumenstroms, nicht aber das Verteilgut durch die Öffnungen in den Bypasskanal, strömen kann. Grundsätzlich können die Öffnungen alle denkbaren Konturen aufweisen, bspw. ovale, vieleckige, längliche, runde etc., sofern sie geeignet sind, ausreichend Luft, aber kein Verteilgut hindurchpassieren zu lassen.

Die Öffnungen des des für Strömungsluft zumindest teilweise durchlässigen Elementes bzw. des Lochblechs können jeweils einen Durchmesser von maximal 1,5 mm oder weniger ausbilden. Die Lochgröße kann sich zweckmäßigerweise nach dem auszubringenden Saatgut richten, so dass über die Öffnungen nur ein Luftvolumenstrom abgezweigt wird, während die Körner des Verteilgutes zu groß für die Öffnungen des des für Strömungsluft zumindest teilweise durchlässigen Elementes bzw. des Lochblechs sind.

Es kann vorgesehen sein, dass das strömungsleitende Element und das für Strömungsluft zumindest teilweise durchlässige Element bzw. das Lochblech jeweils in einem Winkel zueinander angeordnet sind. Das für Strömungsluft zumindest teilweise durchlässige Element bzw. das Lochblech kann/können in Bezug auf das strömungsleitende Element jeweils so angeordnet sein, dass das für Strömungsluft zumindest teilweise durchlässige Element bzw. das Lochblech sich vollständig und/oder zumindest teilweise über die Einmündung des Bypasskanals in die mindestens eine Saatleitung und/oder in die mindestens eine Rückführeinrichtung bzw. Rückführleitung erstreckt.

Darüber hinaus kann jeweils ein für Strömungsluft zumindest teilweise durchlässiges Element bzw. jeweils ein Lochblech an der Einmündung des Bypasskanals in die mindestens Saatleitung und ein weiteres für Strömungsluft zumindest teilweise durchlässiges Element bzw. ein weiteres Lochblech an der Einmündung des Bypasskanals in die mindestens eine Rückführeinrichtung bzw. Rückführleitung vorgesehen sein, welche für Strömungsluft zumindest teilweise durchlässigen Elemente bzw. Lochbleche zumindest weitgehend parallel oder in einem Winkel zueinander angeordnet sind bzw. sein können.

Es kann weiterhin vorgesehen sein, dass ein Druckausgleich zwischen der mindestens einen Saatleitung und der mindestens einen Rückführeinrichtung bzw. Rückführleitung über einen im Verteilerturm befindenden Luftvolumenstromanteil in beide Richtungen erfolgt. Bei einer geöffneten Stellung des zumindest einen Absperrmittels kann ein geringer Luftvolumenstromanteil, welcher sich im Verteilerturm befindet, über den Bypasskanal in die mindestens eine Saatleitung strömen, was für einen zusätzlichen Druckausgleich im Verteilerturm sorgt. Damit kann ein Druckausgleich über einen Luftvolumenstromanteil in beide Strömungsrichtungen im Bypasskanal erfolgen. Bei einer geschlossenen Stellung des zumindest einen Absperrmittels kann ein geringer Luftvolumenstromanteil, welcher sich im Verteilerturm befindet, über den Bypasskanal in die mindestens eine Rückführeinrichtung bzw. Rückführleitung strömen, was für einen zusätzlichen Druckausgleich im Verteilerturm sorgt. Damit kann ein Druckausgleich über einen Luftvolumenstromanteil in beide Strömungsrichtungen im Bypasskanal erfolgen.

Weiter kann vorgesehen sein, dass das zumindest eine Absperrmittel durch eine Weiche oder Klappe ausgebildet ist. Die Weiche oder die Klappe kann verschwenkbar ausgebildet sein. Das zumindest eine Absperrmittel kann motorisch verstellbar ausgebildet sein. Eine motorische Verstellbarkeit des zumindest einen Absperrmittels kann durch einen Antrieb elektromotorisch, pneumatisch oder hydraulisch erfolgen. Damit kann über die Weiche oder die Klappe wahlweise die mindestens eine Rückführleitung oder die mindestens eine Saatleitung abgesperrt werden, so dass damit die Richtung des Verteilgut-Luftvolumenstroms bestimmt wird. Der Verteilgut-Luftvolumenstrom kann damit je nach Stellung der Weiche oder der Klappe über die mindestens eine Saatleitung zu den Ausbringelementen oder über die mindestens eine Rückführleitung zurück zum Steigrohr oder zu einer dem Steigrohr vorgeordneten Leitung des Verteilerturms befördert werden.

Das zumindest eine Absperrmittel kann weiter mit einer Rechnereinheit in Verbindung stehen. Die Rechnereinheit kann Signale vorgeben, welche Position das zumindest eine Absperrmittel in den jeweiligen Abgängen einzunehmen hat, d.h. die Rechnereinheit kann Signale zur Ansteuerung des Absperrmittels vorgeben. Die Signale können durch einen Bediener in einer Bedieneinheit manuell vorgegeben werden. Die Bedieneinheit kann als Touchscreen und/oder als Display und/oder als Tastatur ausgebildet sein, über welcher der Bediener die Anzahl an auszubringendem Verteilgut und damit die Anzahl an geöffneten Abgängen vorgibt. Alternativ können die Signale auf Basis von GPS-Daten vorgegeben werden. Wahlweise können die Schaltstellungen zumindest ausgewählter Absperrmittel von mehreren Absperrmitteln auch auf Grundlage von abgespeicherten und vom Benutzer abrufbaren Kennfelddaten vorgegeben werden, bspw. im Zusammenhang mit einer Fahrgassenschaltung der landwirtschaftlichen Verteilmaschine. Bei einer solchen Fahrgassenschaltung werden gezielt einzelne Saatleitungen abgesperrt und die sich daran anschließenden Säschare deaktiviert, um vorgesehene Fahrgassen von Bewuchs weitgehend freizuhalten, damit dort auch bei späteren Überfahrten, bspw. für Pflege- und/oder Pflanzenschutzaktivitäten ohne Beschädigungen des aufwachsenden Bestandes fahren zu können. Der erfindungsgemäße Verteilerturm sowie die erfindungsgemäße landwirtschaftliche Verteilmaschine ermöglichen es auf einfache Weise, einzelne oder mehrere Saatleitungen zu deaktivieren, ohne dadurch die Strömungs- und/oder Förderverhältnisse in allen übrigen Saatleitungen zu beeinflussen oder zu beeinträchtigen.

Es kann vorgesehen sein, dass jeweils die mindestens eine Saatleitung zumindest abschnittsweise eine Umlenkkontur bzw. einen gekrümmten Verlauf aufweist, wodurch der abgezweigte Verteilgut-Luftvolumenstrom in der mindestens einen Saatleitung eine zumindest teilweise Richtungsänderung erfährt. Der Verteilgut-Luftvolumenstrom kann aus einer weitgehend waagrechten Richtung gemäß dem Abgang in eine Richtung entlang der Längserstreckung der mindestens einen Saatleitung umgelenkt werden. Auch kann die mindestens eine Saatleitung in Bezug auf den Abgang in einem Winkel angeordnet sein, so dass der Verteilgut-Luftvolumenstrom entsprechend eines Krümmungsverlaufs der mindestens einen Saatleitung umgeleitet wird. Die zumindest abschnittsweise zwischen dem Abgang und der mindestens einen Saatleitung ausgebildete Umlenkkontur bzw. der gekrümmte Verlauf kann eine zumindest bereichsweise Querschnittsverengung umfassen, welche zumindest bereichsweise Querschnittsverengung eine Düse ausbildet bzw. bereitstellt. Innerhalb des gekrümmten Verlaufs bzw. innerhalb der zumindest abschnittsweisen ausgebildeten Umlenkkontur kann der Verteilgut-Luftvolumenstrom fokussiert und zentriert werden.

Im Bereich des gekrümmten Verlauf bzw. der Umlenkkontur kann wenigstens ein Sensor angeordnet sein, so dass die Anzahl und/oder die Menge an passierenden Körnern des Verteilguts ermittelt werden können. Der wenigstens eine Sensor kann bspw. durch einen Prallsensor und/oder durch einen optischen Sensor ausgebildet sein. Im Bereich des gekrümmten Verlauf bzw. der Krümmung bzw. der Umlenkkontur kann wenigstens ein Sensor vorgesehen sein, so dass die Anzahl und/oder die Menge an passierenden Körnern des Verteilguts ermittelt werden. Der wenigstens eine Sensor kann durch einen Prallsensor und/oder durch einen optischen Sensor ausgebildet sein. Grundsätzlich können jedoch auch Sensoren an anderen Stellen des Verteilerturms bzw. der Verteilmaschine angeordnet sein.

Gemäß einer Ausführungsform der Erfindung kann die Stellung des zumindest einen Absperrmittels in Abhängigkeit von der mittels des wenigstens einen Sensors gezählten Körner erfolgen. Ermittelt der wenigstens eine Sensor beispielsweise, dass eine gewünschte Menge an Verteilgut innerhalb eines Messintervalls überschritten wird, kann das zumindest eine Absperrmittel die mindestens eine Saatleitung versperren und umgekehrt.

Es kann vorgesehen sein, dass die mindestens eine Rückführeinrichtung bzw. die mindestens eine Rückführleitung in einem Sammelbehälter mündet, welcher mittels einer dem Steigrohr zugeordneten Öffnung, beispielsweise in Form eines Ringspaltes, oder mittels einer dem Steigrohr vorgeordneten Leitung in pneumatischer Verbindung steht, so dass der über die mindestens eine Rückführeinrichtung bzw. die mindestens eine Rückführleitung bewegte Verteilgut-Luftvolumenstrom zurückgeführt wird. Der Sammelbehälter kann trichterförmig und/oder quadratisch ausgebildet sein. Im Übergangsbereich zwischen Sammelbehälter und dem Steigrohr und/oder der dem Steigrohr vorgeordneten Leitung kann sich der Venturi-Effekt einstellen, so dass die Strömungsgeschwindigkeit des in der mindestens einen Rückführeinrichtung bzw. in der mindestens einen Rückführleitung bewegten Verteilgut-Luftvolumenstroms zunimmt. Der Sammelbehälter kann das mindestens eine Steigrohr und/oder die dem Steigrohr vorgeordnete Leitung zumindest teilweise und/oder vollständig umgeben. Der Vorteil einer solchen Konfiguration mit Sammelbehälter besteht unter anderem darin, dass das bei abgesperrter Saatleitung dort gesammelte Verteilgut nicht unmittelbar in den Vorratstank für das Verteilgut zurückgeführt wird, so dass dadurch keine Verfälschungen in einem ggf. eingestellten Mischungsverhältnis entstehen, wenn bspw. eine aus zwei Tanks gespeiste Saatgut-Dünger-Mischung mit fest vorgegebenem Mischungsverhältnis ausgebracht werden soll.

Wenn die die mindestens eine Rückführeinrichtung als Rückführleitung ausgebildet ist, kann diese bspw. als Schlauchleitung oder dergleichen ausgebildet sein, wobei diese Schlauchleitungen jeweils das Steigrohr umgeben. Es kann vorgesehen sein, dass sich jeder Abgang in mindestens eine Rückführleitung abzweigt, so dass die Anzahl an Abgängen am Verteilerkopf auch die Anzahl an Rückführleitungen entspricht. Die Rückführeinrichtung kann bspw. auch als Trichter ausgebildet sein, durch den in koaxialer Anordnung das Steigrohr hindurchführt.

Das mindestens eine Steigrohr und/oder die dem Steigrohr vorgeordnete Leitung kann im Bereich der Öffnung zumindest bereichsweise eine Querschnittsverengung und/oder zumindest bereichsweise eine Querschnittserweiterung aufweisen. Aufgrund der zumindest bereichsweisen Querschnittsverengung und/oder der zumindest bereichsweisen Querschnittserweiterung kann eine Sogwirkung erzeugt und/oder ausgebildet werden, so dass der im Sammelbehälter transportiere Verteilgut-Luftvolumenstrom angesaugt und in den Verteilerturm zurückgeführt wird. Die zumindest bereichsweise Querschnittsverengung kann durch eine Düse ausgebildet sein, welche vorzugsweise der Öffnung vorgeordnet ist. Durch die Düse kann der Verteilgut-Luftvolumenstrom zunächst im Steigrohr zentriert werden, damit der Verteilgut-Luftvolumenstrom gleichmäßig in Richtung des Verteilkopfs geführt werden kann. Die zumindest bereichsweise Querschnittserweiterung kann durch einen Diffusor ausgebildet sein, welcher der Öffnung nachgeordnet ist.

Die Zentrierung des Verteilgut-Luftvolumenstroms kann durch ein der Düse und/oder dem Diffusor nachgeordnetes Wellrohr noch weiter verbessert werden. Dieses Wellrohr kann beispielsweise entlang seiner Längserstreckungsrichtung beispielsweise eine Reihe von Querschnittsreduzierungen in Form von Vertiefungen oder Wellen mit geringeren Durchmessern aufweisen. Die einzelnen Abschnitte des Wellrohrs können beispielsweise durch Schweißen oder mittels Klemmstücken verbunden werden. Ebenso können die Abschnitte aus einem metallischen oder nicht metallischen Werkstoff gebildet sein. Auch könnte das Steigrohr einteilig und bspw. aus Kunststoff gefertigt sein.

Darüber hinaus können die zumindest bereichsweise Querschnittsverengung und die zumindest bereichsweise Querschnittserweiterung im Zusammenspiel mit der Öffnung, beispielsweise in Form eines Ringspaltes, dazu beitragen, mögliche Toleranzen des Verteilgut-Luftvolumenstroms auszugleichen und zu beruhigen, was einen positiven Effekt auf die Verteilgenauigkeit des Verteilerturms hat.

Durch den Sammelbehälter können das Steigrohr und/oder einer dem Steigrohr vorgeordneten Leitung mit der mindestens einen Rückführeinrichtung bzw. der mindestens einen Rückführleitung und der mindestens einen Saatleitung pneumatisch verbunden werden, was für einen Druckausgleich im Verteilerturm sorgt. Insbesondere kann sich im Sammelbehälter ein Druckausgleich einstellen, was einen positiven Einfluss auf die Querverteilung des Verteilerturms hat. Im Sammelbehälter kann sich ein Druck einstellen, welcher idealerweise gleich oder geringer als dem in der Saatleitung und/oder in der mindestens einen Rückführeinrichtung bzw. in der mindestens einen Rückführleitung vorherrschenden Druck ist. Dieses Druckverhältnis kann sich jeweils unabhängig von der Stellung des zumindest einen Absperrmittels und unabhängig von der Anzahl an verschlossenen und/oder geöffneten Abgängen sowie unabhängig von weiteren äußeren Einflussbedingungen, wie die Länge der Saatleitungen, einstellen.

Um die Druckverhältnisse im Verteilerturm weiter verbessern zu können, kann vorgesehen sein, weitere Komponenten des Verteilerturms dauerhaft pneumatisch miteinander zu verbinden, wie beispielsweise den Verteilerkopf, so dass dieser unabhängig von der Stellung des zumindest einen Absperrmittels dauerhaft pneumatisch mit dem Steigrohr, der mindestens einen Rückführeinrichtung bzw. Rückführleitung, dem Bypasskanal sowie der mindestens einen Saatleitung verbunden ist.

Die Erfindung betrifft weiter ein Verfahren für eine landwirtschaftliche Maschine zum Ausbringen von körnigem Verteilgut, wie Saatgut, Düngemittel o. dgl. Das Verfahren umfasst zumindest die nachfolgend erläuterten Schritte; in einem ersten Schritt wird ein Verteilerturm mit einem Steigrohr und mit einem sich daran anschließend und wahlweise bzw. optional als Bestandteil des Verteilerturms ausgebildeten Verteilerkopfes bereitgestellt. In einem weiteren Schritt wird dem Verteilerkopf des Verteilerturms ein Verteilgut-Luftvolumenstrom zugeführt. Anschließend wird der Verteilgut-Luftvolumenstrom in eine Vielzahl von Verteilgut-Luftvolumenströmen aufgeteilt. Die Vielzahl von Verteilgut-Luftvolumenströmen ergibt sich aus der Anzahl an Abgängen, welche jeweils am Umfang des Verteilerkopfs angeordnet sind. Die Verteilgut-Luftvolumenströme werden in einem weiteren Schritt wahlweise entlang mindestens einer Saatleitung oder entlang mindestens einer Rückführeinrichtung bzw. mindestens einer Rückführleitung befördert. Der Strömungsweg der Verteilgut-Luftvolumenströme kann dadurch vorgegeben und/oder beeinflusst werden, indem die mindestens eine Saatleitung oder die mindestens eine Rückführeinrichtung bzw. die mindestens eine Rückführleitung versperrt oder geöffnet werden.

In einem weiteren Schritt erfolgt ein pneumatisches Verbinden der mindestens einen Saatleitung und der mindestens einen Rückführeinrichtung bzw. der mindestens einen Rückführleitung über ein Abzweigen eines Luftvolumenstromanteils vom Verteilgut-Luftvolumenstrom, wobei dem Bypasskanal zumindest an einer Einmündung in die mindestens eine Saatleitung und/oder in die mindestens eine Rückführeinrichtung bzw. in die mindestens eine Rückführleitung ein strömungsleitendes Element zugeordnet ist, über welches ein Luftvolumenstromanteil von Verteilgut-Luftvolumenstromanteil abgezweigt wird. Die pneumatische Verbindung des Abgangs, der mindestens einen Saatleitung und der mindestens einen Rückführeinrichtung bzw. der mindestens einen Rückführleitung kann unabhängig von der Stellung des zumindest einen Absperrmittels zu jedem Zeitpunkt erfolgen.

Es kann vorgesehen sein, dass der Luftvolumenstromanteil das strömungsleitende Element zumindest teilweise umströmt, so dass eine weitgehende Trennung zwischen Verteilgut und Luftvolumenstrom erfolgt. Der abgezweigte Luftvolumenstromanteil kann anschließend über den Bypasskanal wahlweise in die mindestens eine Saatleitung oder in die mindestens eine Rückführeinrichtung bzw. Rückführleitung strömen.

Es ist erfindungsgemäß vorgesehen, dass der Luftvolumenstromanteil über wenigstens eine Öffnung oder über eine Vielzahl an Öffnungen eines für Strömungsluft zumindest teilweise durchlässigen Elementes und/oder eines Lochblechs in den Bypasskanal strömt, welches für Strömungsluft zumindest teilweise durchlässiges Element und/oder Lochblech sich an das strömungsleitende Element anschließt.

Bei einer geöffneten Saatleitung kann der Verteilgut-Luftvolumenstrom entlang der mindestens einen Saatleitung zu den Ausbringelementen bzw. zu den Reihen transportiert werden, wobei davon ein Luftvolumenstromanteil über den Bypasskanal in die mindestens einen Rückführleitung fließt. Bei einer versperrten bzw. geschlossenen Saatleitung kann der Verteilgut-Luftvolumenstrom in die mindestens eine Rückführeinrichtung bzw. Rückführleitung umgelenkt und zurück zum Verteilerturm befördert werden, wobei sich davon ein Luftvolumenstromanteil abzweigt und über den Bypasskanal in die mindestens eine Saatleitung strömt.

Die Rückführung des Verteilgut-Luftvolumenstroms kann in das Steigrohr und/oder in einer dem Steigrohr vorgeordneten Leitung erfolgen, wobei in der Einmündung der mindestens einem Rückführeinrichtung in das Steigrohr oder in die Leitung eine Sogwirkung erzeugt wird, so dass der Verteilgut-Luftvolumenstrom in seiner Geschwindigkeit beschleunigt bzw. angesaugt wird.

Es kann vorgesehen sein, dass ein Druck zwischen Abgang, Saatleitung und Rückführeinrichtung bzw. Rückführleitung über einen im Verteilerturm befindenden Luftvolumenstromanteil in beide Richtungen ausgeglichen wird. Das kann bedeuten, dass bei einer offenen Stellung des zumindest einen Absperrmittels ein geringer Luftvolumenstromanteil von der mindestens einen Rückführeinrichtung über die wenigstens eine Öffnung des zumindest einen Absperrmittels in die mindestens eine Saatleitung strömen kann, und dass bei einer geschlossenen Stellung des zumindest einen Absperrmittels ein geringer Luftvolumenstromanteil über die wenigstens eine Öffnung des zumindest einen Absperrmittels von der mindestens einen Saatleitung in die mindestens eine Rückführeinrichtung strömen kann.

Merkmale, welche vorhergehend zu denkbaren Ausführungsformen des erfindungsgemäßen Verteilerturms erwähnt wurden, können ebenso bei denkbaren Ausführungsformen des erfindungsgemäßen Verfahrens vorgesehen sein.

Die Erfindung betrifft zudem eine landwirtschaftliche Maschine zum Ausbringen von granulatartigem Verteilgut, wie Saatgut, Düngemittel o. dgl., mit zumindest einem Verteilerturm gemäß einem der Ansprüche 1 bis 9 bzw. gemäß einer der zuvor genannten Ausführungsvarianten, wobei die landwirtschaftliche Maschine insbesondere mit einem Verfahren gemäß einem der Ansprüche 10 bis 12 bzw. einem der beschriebenen Varianten des erfindungsgemäßen Verfahrens betrieben wird.

Der landwirtschaftlichen Maschine kann ein Vorratstank oder können mehrere Vorratstanks zugeordnet sein, in welchem bzw. in welchen das Verteilgut (Saatgut, Dünger etc.) gelagert und mitgeführt werden kann. Bei dem Verteilgut kann es sich um Saatgut und/oder um Dünger handeln. Der Vorratstank oder die Vorratstanks kann/können vorzugsweise trichterförmig ausgebildet sein. Unterhalb des Vorratstanks, vorzugsweise am tiefsten Punkt des Vorratstanks, kann eine Dosiervorrichtung angeordnet sein, mittels welcher Verteilgut aus dem Vorratstank entnommen und einem Leitungssystem, vorzugsweise zunächst einer Leitung, zugeführt werden kann. Das entnommene Verteilgut kann mit einem Luftvolumenstrom vermischt werden, so dass ein Verteilgut-Luftvolumenstrom gebildet wird. Der Luftvolumenstrom kann durch ein Gebläse erzeugt werden, welches beispielsweise durch ein Radial- oder Zentrifugalgebläse ausgebildet ist. Bei mehreren Vorratstanks können jeweils mittels der diesen zugeordneten Dosiervorrichtungen den jeweiligen Luftströmen die gewünschten Mengen an Saatgut oder Dünger zudosiert und diese Luftströme anschließend gemischt und vereinigt werden, wodurch eine steuerbare Mischung an Saatgut und Dünger ausgebracht werden kann. Mithilfe des Luftvolumenstroms kann das Verteilgut bzw. die Verteilgutmischung entlang der Leitung bis zu einem Verteilerturm transportiert und dort entsprechend aufgeteilt und auf das Feld mittels bodennah angeordneten Ausbringelementen ausgebracht werden. Die Ausbringelemente können beispielsweise durch Scheibenschare oder durch Zinkenschare ausgebildet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt in einer schematischen Ansicht den Aufbau einer landwirtschaftlichen Maschine mit einer Ausführungsvariante eines erfindungsgemäßen Verteilerturms.
Fig. 1B zeigt eine Ausführungsform eines erfindungsgemäßen Verteilerturms in perspektivischer Ansicht.
Figuren 2A und 2B zeigen ein Ausführungsbeispiel eines Abgangs innerhalb des Verteilerturms gemäß Fig. 1B in jeweils einer Schnittdarstellung, die verschiedenen Stellungen des zumindest einen Absperrmittels sowie die sich daraus ergebenden Verteilgut-Luftvolumenströme und verdeutlicht Schritte, wie sie bei diversen Ausführungsformen des erfindungsgemäßen Verfahrens vorliegen können.
Figuren 3A und 3B zeigen ein weiteres Ausführungsbeispiel eines Abgangs in jeweils einer Schnittdarstellung, die verschiedenen Stellungen des zumindest einen Absperrmittels sowie die sich daraus ergebenden Verteilgut-Luftvolumenströme und verdeutlicht Schritte, wie sie bei diversen Ausführungsformen des erfindungsgemäßen Verfahrens vorliegen können.
Fig. 4 zeigt in einer perspektivischen Schnittdarstellung die Einmündung der Rückführleitung über einen Sammelbehälter an das Steigrohr und die sich daraus ergebenden Verteilgut-Luftvolumenströme.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Verteilerturm, die landwirtschaftliche Maschine und wie das erfindungsgemäße Verfahren ausgestaltet sein können und stellen keine abschließende Begrenzung dar.

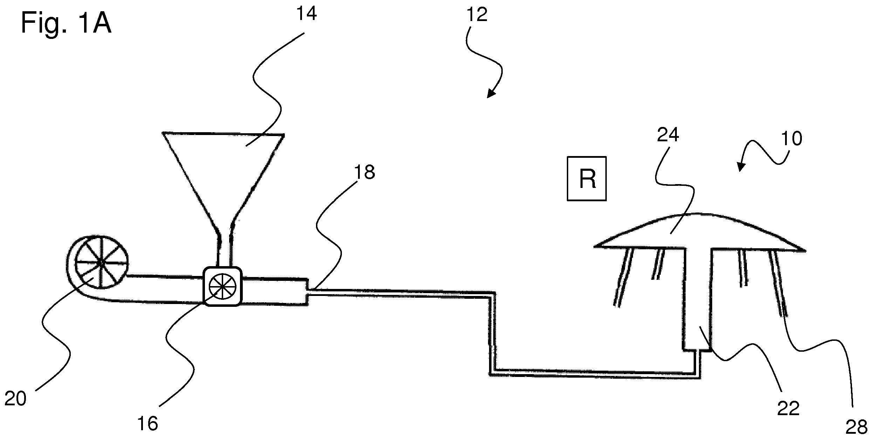

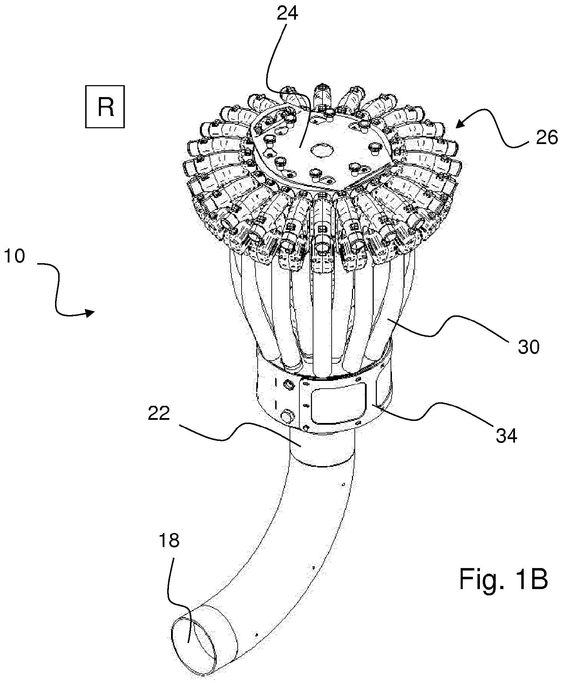

Die Fig. 1 zeigt in einer schematischen Ansicht eine landwirtschaftliche Maschine 12. Bei der landwirtschaftlichen Maschine 12 handelt es sich um eine Sämaschine, welche zum Ausbringen von granulatartigem bzw. körnigem Verteilgut, wie Saatgut und/oder Düngemittel o. dgl. ausgebildet ist. Die landwirtschaftliche Maschine 12 umfasst mindestens einen Vorratstank 14, in welchem das Verteilgut gelagert und mitgeführt werden kann. Wahlweise können auch mehrere Vorratstanks 14 (nicht gezeigt) vorgesehen sein, wodurch die Maschine 12 zum Ausbringen von gemischtem Saatgut und Dünger geeignet sein kann. Der Vorratstank 14 ist trichterförmig ausgebildet, wobei am tiefsten Punkt des Vorratstanks 14 eine Dosiervorrichtung 16 vorgesehen ist. Der Dosiervorrichtung 16 ist ein Gebläse 20 vorgeordnet, welches in einer Leitung 18 einen Luftvolumenstrom erzeugt. Die Dosiervorrichtung 16 entnimmt aus dem Vorratstank 14 eine gewünschte Menge an Verteilgut und führt es der Leitung 18 zu, so dass sich das aus dem Vorratstank 14 entnommene Verteilgut mit dem Luftvolumenstrom vermischt, woraus resultierend ein Verteilgut-Luftvolumenstrom gebildet wird. Mit Hilfe des Luftvolumenstroms wird das Verteilgut entlang der Leitung 18 bis zu einem Verteilerturm 10 transportiert, so dass das Verteilgut anschließend über mindestens eine Saatleitung 28 zu hier nicht dargestellten bodennah angeordneten und/oder zu im Boden geführten Ausbringelementen geführt wird.

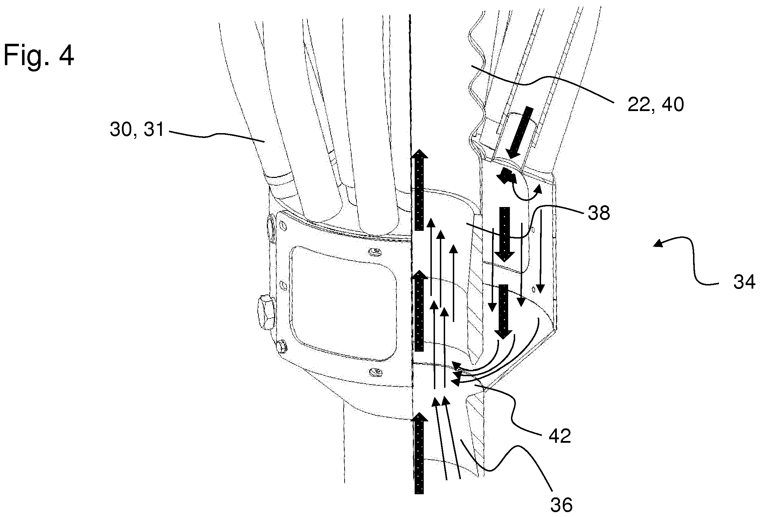

Der Verteilerturm 10 umfasst ein Steigrohr 22, welches mehrere Abschnitte umfasst. In einem ersten Abschnitt weist das Steigrohr 22 eine Düse 36 (vgl. Fig. 4) auf, mittels welcher eine zumindest bereichsweise Querschnittsverengung des Steigrohrs 22 hergestellt ist. An die Düse 36 schließt sich in einem weiteren Abschnitt ein Diffusor 38 (vgl. Fig. 4) an, mittels welchem eine zumindest bereichsweise Querschnittserweiterung ausgebildet wird. An den Diffusor 38 schließt ein das Steigrohr 22 bildende Wellrohr 40 (vgl. Fig. 4) an, welches Wellrohr 40 entlang seiner Längserstreckungsrichtung unterschiedliche, d.h. regelmäßig variierende Querschnitte aufweist.

Am oberen Ende des Steigrohrs 22 bzw. des Wellrohrs 40 schließt sich ein Verteilerkopf 24 an, der insbesondere als Bestandteil des Verteilerturms 10 ausgebildet sein kann bzw. der insbesondere einen Teil des Verteilerturms bildet, wobei der Verteilerkopf 24 ringförmig ausgebildet ist (vgl. hierzu auch Fig. 1B). Am Verteilerkopf 24 ist eine Vielzahl von Abgängen 26 vorgesehen. Die Abgänge 26 sind in einem gleichmäßigen Abstand am Umfang des Verteilerkopfs 24 angeordnet, und zwar in konzentrischer Anordnung (Fig. 1B).

Dem Verteilerturm 10 ist ein Verteilgut-Luftvolumenstrom zuführbar, welcher über die Leitung 18 und über die Steigleitung 22 bzw. das Wellrohr 40 dem Verteilerkopf 24 zugeführt wird. Der dem Verteilerkopf 24 zugeführte Verteilgut-Luftvolumenstrom kann über die Abgänge 26 (vgl. Figuren 1B, 2A, 2B, 3A und 3B) in einzelne Verteilgut-Luftvolumenströme aufgeteilt werden. Hierbei erfährt der Verteilgut-Luftvolumenstrom zunächst eine Richtungsumkehr aus einer zumindest weitestgehend vertikalen Bewegung entlang der Längserstreckungsrichtung des Steigrohrs 22 in eine zumindest weitgehend waagrechte Bewegung in Richtung der Abgänge 26, indem das Verteilgut von weitgehend senkrecht von unten am Deckel des Verteilerkopfes 24 abprallt und durch den Luftvolumenstrom in Richtung der Abgänge 26 geleitet wird. Je gleichmäßiger die Verteilung zwischen den Abgängen 26 erfolgt, desto gleichmäßiger ist die Querverteilung des Verteilguts an der landwirtschaftlichen Maschine 12.

Es wird an dieser Stelle darauf verwiesen, dass der Verteilerturm 10 auch einen anderen Aufbau besitzen kann, wonach die Leitung 18 in einen Verteilerkopf 24 mündet, welchem Verteilerkopf 24 sich das Steigrohr 22 anschließt.

Die perspektivische Ansicht der Fig. 1B zeigt beispielhaft eine Ausführungsvariante eines erfindungsgemäßen Verteilerturms 10, welcher ein zumindest weitgehend vertikal ausgebildetes Steigrohr 22 umfasst. Dem Steigrohr 22 ist die Leitung 18 vorgeordnet, welche einen zumindest weitgehend horizontalen Verlauf und sich einen an den horizontalen Verlauf in senkrechte Richtung anschließenden Krümmungsverlauf umfasst. Die Leitung 18 weist einen zumindest weitgehend gleichen Querschnitt auf, welcher zylindrisch ausgebildet ist. Am oberen Ende mündet das Steigrohr 22 in den ringförmig ausgestalteten Verteilerkopf 24, der mit den konzentrisch angeordneten Abgängen 26 ausgestattet ist.

Wie es die Fig. 1B erkennen lässt, können sich die Abgänge 26 jeweils in eine Saatleitung 28 und in eine Rückführeinrichtung 30 bzw. eine die Rückführeinrichtung 30 bildende Rückführleitung 31 verzweigen, wobei die Saatleitung 28 und die Rückführeinrichtung 30 bzw. die Rückführleitung 31 zueinander winkelig angeordnet sind. Die Saatleitung 28 mündet zu den hier nicht näher dargestellten Ausbringelementen, welche bodennah angeordnet oder im Boden geführt sind, so dass das Verteilgut auf das Feld ausgebracht werden kann. Die Rückführeinrichtung 30 (gebildet bspw. durch einen hier nicht gezeigten gemeinsamen Rückführtrichter, der das Steigrohr koaxial umgibt) bzw. die Rückführleitungen 31 münden allesamt in einen Sammelbehälter 34, der in etwa in selber Höhe wie die Düse 36 (Fig. 4) platziert ist, in das Steigrohr 22, so dass das Verteilgut zurückgeführt wird und wieder in das Steigrohr 22 eingespeist werden kann.

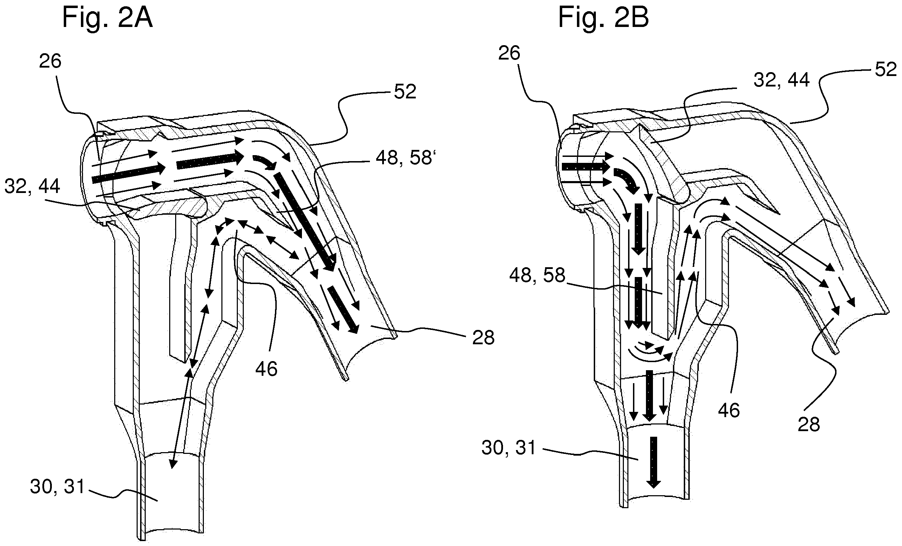

Zumindest einem der Abgänge 26 ist ein Absperrmittel 32 zugeordnet, mittels welchem wahlweise die jeweilige Saatleitung 28 (vgl. Figur 2B) oder die jeweilige Rückführleitung 31 (vgl. Figuren 2A, 2B) absperrbar bzw. mit dem Verteilgut-Luftvolumenstrom beaufschlagbar ist. Über das Absperrmittel 32 kann die Strömungsrichtung des Verteilgut-Luftvolumenstroms bestimmt werden, welche wahlweise entlang der Saatleitung 28 oder entlang der Rückführleitung 31 erfolgt. Das Absperrmittel 32 umfasst einen hier nicht näher gezeigten Antrieb, welcher elektromotorisch, pneumatisch oder hydraulisch ausgebildet sein kann. Über den Antrieb ist das Absperrmittel 32 verstellbar bzw. verschwenkbar.

Das Absperrmittel 32 steht darüber hinaus mit einer in Fig. 1B lediglich schematisch angedeuteten Rechnereinheit R in Verbindung, welche Rechnereinheit R Signale zur Ansteuerung des Absperrmittels 32 vorgibt. Die jeweiligen Signale sind durch einen Bediener über eine hier nicht dargestellte Bedieneinheit in Form eines Touchscreen oder eines Displays (ggf. auch durch Kennfelddaten) vorgebbar. Zudem sind die Signale wahlweise oder zusätzlich auch über GPS-Daten, ggf. kombiniert mit Kennfelddaten, bspw. für eine Fahrgassenschaltung, vorgebbar.

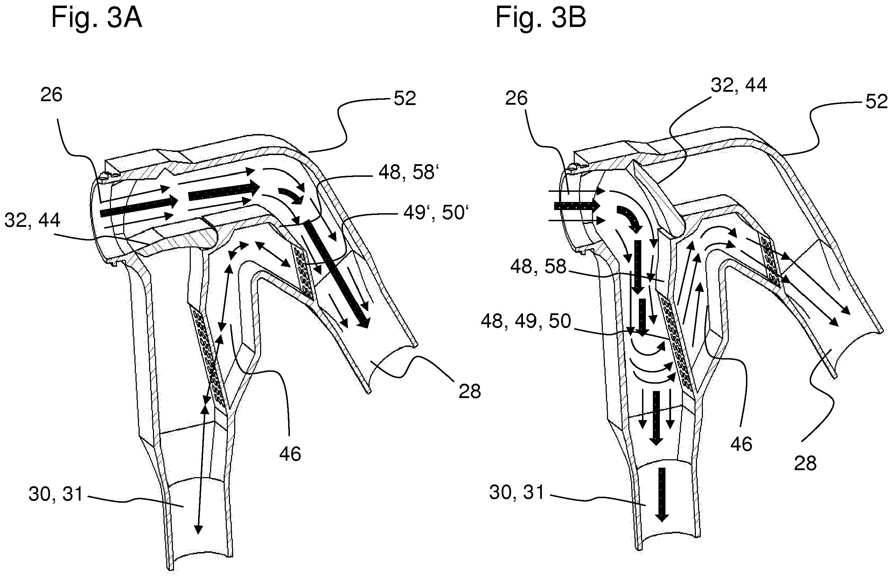

Wie es die schematischen Darstellungen der Figuren 2A, 2B und 3A sowie 3B erkennen lassen, sind die Saatleitung 28 und die Rückführleitung 31 über einen Bypass 46 pneumatisch miteinander verbunden, indem vom Verteilgut-Luftvolumenstrom ein Luftvolumenstromanteil abzweigbar ist. Durch den Bypass 46 kann unabhängig von der Stellung des Absperrmittels 32 ein Druckausgleich im Verteilerturm 10 erfolgen.

Die Figuren 2A und 2B zeigen einen Ausschnitt des Verteilerturms 10, insbesondere einen Abgang 26 des Verteilerkopfes 24 sowie verschiedene Stellungen des mindestens einen Absperrmittels 32 und die sich daraus ergebenden Verteilgut-Luftvolumenströme, wobei der Verteilgutstrom jeweils durch schwarze, stärkere Pfeile und der Luftvolumenstrom bzw. der Luftvolumenstromanteil durch dünnere Pfeile dargestellt sind.

Innerhalb des Verteilerkopfes 24 wird der gesamte Luftstrom in die Abgänge 26 verteilt, wodurch über die Abgänge 26 der gemeinsame Verteilgut-Luftvolumenstrom in einzelne Verteilgut-Luftvolumenströme aufgeteilt wird. Jeder Abgang 26 verzweigt sich jeweils in mindestens eine Saatleitung 28 und in mindestens eine Rückführeinrichtung 30, hier gebildet durch eine Rückführleitung 31, wobei die Saatleitung 28 und die Rückführleitung 31 jeweils winkelig zueinander angeordnet sind. Die mindestens eine Saatleitung 28 und die mindestens eine Rückführleitung 31 sind pneumatisch über einen Bypasskanal 46 miteinander verbunden, der dafür sorgt, dass insbesondere bei geschlossenem Absperrmittel 32 (vgl. Fig. 2B) ein Luftvolumenstromanteil vom Verteilgut-Luftvolumenstromanteil abgezweigt wird.

Die mindestens eine Saatleitung 28 weist einen gekrümmten Verlauf bzw. eine hier so genannte Umlenkkontur 52 auf, mittels welcher gegenüber dem Abgang 26 eine Richtungsänderung des Verteilgut-Luftvolumenstroms aus einer waagrechten in einer schrägen Richtung entlang der Längserstreckungsrichtung der mindestens einen Saatleitung 28 erfolgt. Im Bereich dieses gekrümmten Verlaufs bzw. dieser Umlenkkontur 52 kann wenigstens ein hier nicht dargestellter Prallsensor vorgesehen sein, welcher die Anzahl und/oder oder die Menge an passierendem Verteilgut ermittelt. Wahlweise können optische Sensoren vorgesehen sein.

Der Verteilerturm 10 umfasst zumindest ein Absperrmittel 32, welches Absperrmittel 32 dem Abgang 26 zugeordnet ist. Normalerweise kann jedem Abgang 26 ein solches Absperrmittel 32 zugeordnet sein. Es kann jedoch auch genügen, nur einzelnen von mehreren Abgängen 26 jeweils separate Absperrmittel 32 zuzuordnen, sollen bspw. definierte Fahrgassenschaltungen durch variables Absperren oder Freigeben bestimmter Saatleitungen 28 ermöglicht werden. Das zumindest eine Absperrmittel 32 ist durch eine Weiche 44 ausgebildet, welche verschwenkbar ausgebildet ist. Über die Weiche 44 wird wahlweise die mindestens eine Rückführleitung 31 (vgl. Fig. 2A) oder die mindestens eine Saatleitung 28 (vgl. Fig. 2B) abgesperrt, so dass damit die Richtung des Verteilgut-Luftvolumenstroms bestimmt wird. Der Verteilgut-Luftvolumenstrom wird damit je nach Stellung der Weiche 44 über die mindestens eine Saatleitung 28 zu den Ausbringelementen oder über die mindestens eine Rückführleitung 31 zurück zum Steigrohr 22 oder zu einer dem Steigrohr 22 vorgeordneten Leitung 18 des Verteilerturms 10 befördert.

In der Darstellung der Fig. 2A ist die Weiche 44 geöffnet, so dass die mindestens eine Saatleitung 28 vollständig freigegeben und die mindestens eine Rückführleitung 31 mittels der Weiche 44 versperrt ist. Der über den Abgang 26 abgezweigte Verteilgut-Luftvolumenstrom wird damit über die mindestens eine Saatleitung 28 zu den Ausbringelementen bewegt. In einem Übergangsbereich zwischen dem Abgang 26 und der mindestens einen Saatleitung 28 ist zumindest bereichsweise eine Querschnittsverengung vorgesehen, welche zumindest bereichsweise Querschnittsverengung durch einen in die Einmündung des Bypasskanals 46 in die Saatleitung 28 ragenden wenigstens eine Steg 58' gebildet ist. Durch die zumindest bereichsweise Querschnittsverengung wird eine Art Düse ausgebildet, so dass der Verteilgut-Luftvolumenstrom entlang der mindestens einen Saatleitung 28 beschleunigt und fokussiert wird. Die mindestens eine Saatleitung 28 ist in Bezug auf den Abgang 26 in einem Winkel angeordnet, so dass der Verteilgut-Luftvolumenstrom entsprechend eines Krümmungsverlaufs der mindestens einen Saatleitung 28 umgeleitet wird.

Der wenigstens eine Steg 58' fungiert gleichzeitig als strömungsleitendes Element 48 bzw. als Abscheider, welcher an der Einmündung des Bypasskanals 46 in die mindestens eine Saatleitung 28 angeordnet ist, so dass zumindest eine weitgehende Trennung zwischen dem Verteilgut und dem Luftvolumenstrom erfolgt. Der Luftvolumenstromanteil umströmt den wenigstens einen Steg 58' zumindest weitestgehend und wird dadurch in seiner Strömungsrichtung umgelenkt. Durch den wenigstens einen Steg 58' soll unter anderem verhindert werden, dass während dem Abzweigen des Luftvolumenstromanteils des Verteilgut-Luftvolumenstroms kein ungewolltes Verteilgut über den Bypasskanal 46 in die mindestens eine Rückführleitung 31 mitgerissen wird. Der Luftvolumenstromanteil strömt damit über den Bypasskanal 46 zurück zum Steigrohr 22 oder in die Leitung 18, wodurch resultierend ein Druckausgleich im Verteilerturm 10 erzeugt wird. Um einen optimalen Druckausgleich zu erreichen, strömt zudem ein im System vorhandener geringer Luftvolumenstromanteil von der mindestens einen Rückführleitung 31 über den Bypasskanal 46 zur mindestens einen Saatleitung 28, d.h. ein Druckausgleich über den Luftvolumenstromanteil erfolgt im Bypasskanal 46 über beide Richtungen.

In der Darstellung der Fig. 2B befindet sich die Weiche 44 in einer geschlossenen Stellung, so dass die mindestens eine Rückführleitung 31 vollständig geöffnet und die mindestens eine Saatleitung 28 mittels der Weiche 44 versperrt ist. Bei geschlossener Stellung der Weiche 44 wird der durch den Abgang 26 abgezweigte Verteilgut-Luftvolumenstromanteil zur mindestens einen Rückführleitung 31 und damit zurück zum Verteilerturm 10 befördert.

An der Einmündung des Bypasskanals 46 in die mindestens eine Rückführleitung 31 ist zumindest abschnittsweise wenigstens ein strömungsleitendes Element 48 vorgesehen, welches durch wenigstens eine Steg 58 ausgebildet ist. Der wenigstens eine Steg 58 bzw. das vertikal angeordnete strömungsleitende Element 48 bildet einen Abscheider und damit einen Abscheidebereich aus, so dass ein Luftvolumenstromanteil des Verteilgut-Luftvolumenstromanteils den wenigstens einen Steg 58 zumindest teilweise umströmt. Damit wird ein Luftvolumenstromanteil vom Verteilgut-Luftvolumenstromanteil zumindest weitgehend abgezweigt, während das Verteilgut weiter die mindestens eine Rückführleitung 31 passiert. Neben dem Verteilgut strömt auch ein geringer Luftvolumenstromanteil entlang der mindestens einen Rückführleitung 31, welcher für einen optimierten Druckausgleich im Verteilerturm 10 sorgt. Weiter strömt zudem ein im System vorhandener geringer Luftvolumenstromanteil von der mindestens einen Saatleitung 28 über den Bypasskanal 46 zur mindestens einen Rückführleitung 31, d.h. ein Druckausgleich über den Luftvolumenstromanteil erfolgt über den Bypasskanal 46 beide Richtungen.

Die Figuren 3A und 3B zeigen einen Ausschnitt des Verteilerturms 10, insbesondere einen Abgang 26 des Verteilerkopfes 24 sowie verschiedene Stellungen des zumindest einen Absperrmittels 32 und die sich daraus ergebenden Verteilgut-Luftvolumenströme, wobei der Verteilgutstrom jeweils durch einen schwarzen, dicken Pfeil und der Luftvolumenstrom bzw. der Luftvolumenstromanteil durch einen dünnen Pfeil dargestellt sind.

Über den Abgang 26 wird der Verteilgut-Luftvolumenstrom in einen einzelnen Verteilgut-Luftvolumenstrom aufgeteilt. Der Abgang 26 verzweigt sich jeweils in mindestens eine Saatleitung 28 und in mindestens eine Rückführleitung 31, welche jeweils winkelig zueinander angeordnet sind. Die mindestens eine Saatleitung 28 und die mindestens eine Rückführleitung 31 sind pneumatisch über einen Bypasskanal 46 miteinander verbunden, indem ein Luftvolumenstromanteil vom Verteilgut-Luftvolumenstromanteil abgezweigt wird.

Die mindestens eine Saatleitung 28 weist einen gekrümmten Verlauf bzw. eine hier so genannte Umlenkkontur 52 auf, mittels welcher gegenüber dem Abgang 26 eine Richtungsänderung des Verteilgut-Luftvolumenstroms aus einer waagrechten in einer schrägen Richtung entlang der Längserstreckungsrichtung der mindestens einen Saatleitung 28 erfolgt. Im Bereich dieser Umlenkkontur 52 kann wenigstens ein hier nicht dargestellter Prallsensor vorgesehen sein, welcher die Anzahl und/oder oder die Menge an passierendem Verteilgut ermittelt. Wahlweise können optische Sensoren vorgesehen sein.

Der Verteilerturm 10 umfasst zumindest ein Absperrmittel 32, welches Absperrmittel 32 dem Abgang 26 zugeordnet ist. Das zumindest eine Absperrmittel 32 ist durch eine Weiche 44 ausgebildet, welche verschwenkbar ausgebildet ist. Über die Weiche 44 wird wahlweise die mindestens eine Rückführeinrichtung 30, hier gebildet durch die Rückführleitung 31 (vgl. Fig. 3A) oder die mindestens eine Saatleitung 28 (vgl. Fig. 3B) abgesperrt, so dass damit die Richtung des Verteilgut-Luftvolumenstroms bestimmt wird. Der Verteilgut-Luftvolumenstrom wird damit je nach Stellung der Weiche 44 über die mindestens eine Saatleitung 28 zu den Ausbringelementen oder über die mindestens eine Rückführleitung 31 zurück zum Verteilerturm 10 befördert.

In der Fig. 3A ist die die das Absperrmittel 32 bildende Weiche 44 geöffnet, so dass die mindestens eine Saatleitung 28 vollständig freigegeben und die mindestens eine Rückführleitung 31 mittels der Weiche 44 versperrt ist. Der über den Abgang 26 abgezweigte Verteilgut-Luftvolumenstrom wird damit über die mindestens eine Saatleitung 28 zu den Ausbringelementen bewegt. In einem Übergangsbereich zwischen dem Abgang 26 und der mindestens eine Saatleitung 28 ist zumindest bereichsweise eine Querschnittsverengung vorgesehen, welche zumindest bereichsweise Querschnittsverengung durch wenigstens einen Steg 58' (strömungsleitendes Element 48) gebildet ist. Durch die zumindest bereichsweise Querschnittsverengung wird eine Art Düse ausgebildet, so dass der Verteilgut-Luftvolumenstrom entlang der mindestens einen Saatleitung 28 beschleunigt und fokussiert wird. An das strömungsleitende Element 48 bzw. an den wenigstens einen Steg 58' schließt sich in einem Winkel wenigstens ein für Strömungsluft zumindest teilweise durchlässiges Element 49' an, das hier durch ein Lochblech 50' gebildet ist, welches sich vollständig über die Einmündung des Bypasskanals 46 in die mindestens eine Saatleitung 28 erstreckt. Der wenigstens eine Steg 58' fungiert gleichzeitig als Abscheider und/oder bildet einen Abscheidebereich aus, so dass eine zumindest weitgehende Trennung zwischen dem Verteilgut und dem Verteilgut-Luftvolumenstroms erfolgt. Der Luftvolumenstromanteil strömt so dann um den wenigstens einen Steg 58' und strömt über das Element 49' bzw. durch das Lochblech 50' in den Bypasskanal 46, wodurch resultierend ein Druckausgleich im Verteilerturm 12/852/8520 erzeugt wird. Um einen optimalen Druckausgleich zu erreichen, strömt zudem ein im System vorhandener geringer Luftvolumenstromanteil von der mindestens einen Rückführleitung 31 über den Bypasskanal 46 zur mindestens einen Saatleitung 28, d.h. ein Druckausgleich über den Luftvolumenstromanteil erfolgt im Bypasskanal 46 über beide Richtungen.

In der Darstellung der Fig. 3B befindet sich die Weiche 44 in einer geschlossenen Stellung, so dass die mindestens eine Rückführleitung 31 vollständig geöffnet und die mindestens eine Saatleitung 28 mittels der Weiche 44 versperrt ist. Bei dieser Stellung der Weiche 44 wird der durch den Abgang 26 abgezweigte Verteilgut-Luftvolumenstromanteil zur mindestens einen Rückführleitung 31 und damit zurück zum Verteilerturm 10 befördert.

An der Einmündung des Bypasskanals 46 in die mindestens eine Rückführleitung 30 ist wenigstens ein Steg 58 vorgesehen, der das strömungsleitende Element 48 bildet. An dieses strömungsleitende Element 48 bzw. an den Steg 58 schließt sich ein für Strömungsluft zumindest teilweise durchlässiges Element 49 in vertikaler oder leicht gegenüber der Vertikalen geneigten Richtung nach unten an, das hier durch ein Lochblech 50 gebildet ist. Der wenigstens eine Steg 58 bildet einen Abscheider und damit einen Abscheidebereich aus, so dass ein Luftvolumenstromanteil des Verteilgut-Luftvolumenstromanteils den wenigstens einen Steg 58 zumindest weitgehend umströmt und über das Element 49 bzw. das Lochblech 50 in den Bypasskanal 46 strömt. Damit wird ein Luftvolumenstromanteil vom Verteilgut-Luftvolumenstromanteil zumindest teilweise abgezweigt, während das Verteilgut weiter die mindestens eine Rückführleitung 31 passiert. Neben dem Verteilgut strömt auch ein geringer Luftvolumenstromanteil die mindestens eine Rückführleitung 31 entlang, welcher für einen optimalen Druckausgleich im Verteilerturm 10 sorgt. Weiter strömt zudem ein im System vorhandener geringer Luftvolumenstromanteil von der mindestens einen Saatleitung 28 über den Bypasskanal 46 zur mindestens einen Rückführleitung 31, d.h. ein Druckausgleich über den Luftvolumenstromanteil erfolgt über den Bypasskanal 46 beide Richtungen.

In der Fig. 4 ist die Einmündung der mindestens einen Rückführeinrichtung 30 dargestellt, die hier durch mehrere konzentrisch zum Steigrohr 22 angeordnete Rückführleitungen 31 gebildet ist, die über einen Sammelbehälter 34 in das Steigrohr 22 führen. Gemäß vorliegender Ausführungsform münden die Rückführleitungen 31 jeweils von oben her in einem Sammelbehälter 34. Der Sammelbehälter 34 ist trichterförmig ausgebildet und am Umfang des Steigrohrs 22 angeordnet bzw. koaxial zu diesem. Aufgrund der trichterförmigen Ausbildung des Sammelbehälters 34 wird ein Venturi-Effekt erzeugt, so dass der Verteilgut-Luftvolumenstrom im Sammelbehälter 34 beschleunigt und fokussiert wird. Der Sammelbehälter 34 steht mit dem Steigrohr 22 über eine im Steigrohr 22 vorgesehene Öffnung in Form eines Ringspaltes 42 in pneumatischer Verbindung, so dass der über die mindestens eine Rückführleitung 31 bewegte Verteilgut-Luftvolumenstrom in den Verteilerturm 10 zurückgeführt wird. Die Strömungsrichtung des Verteilgutstroms wird jeweils durch einen schwarzen, dicken Pfeil und des Luftvolumenstroms bzw. des Luftvolumenstromanteils wird jeweils durch einen dünnen Pfeil dargestellt.

Die Rückführung des Verteilgut-Luftvolumenstroms in das Steigrohr 22 wird dadurch verbessert, indem dem Ringspalt 42 eine zumindest bereichsweise Querschnittsverengung in Form einer Düse 36 vorgeordnet ist. Durch die Düse 36 wird eine Sogwirkung erzeugt, so dass der Verteilgut-Luftvolumenstrom in das Steigrohr 22 zurückgeführt wird. Das Steigrohr 22 umfasst weiter eine an den Ringspalt 42 anschließende zumindest bereichsweise Querschnittserweiterung in Form von einem Diffusor 38, so dass der Querschnitt des Steigrohrs 22 auf den bisherigen Querschnitt erweitert wird. Darüber hinaus tragen die zumindest bereichsweise Querschnittsverengung und die zumindest bereichsweise Querschnittserweiterung im Zusammenspiel mit dem Ringspalt 42 dazu bei, mögliche Toleranzen des Verteilgut-Luftvolumenstroms auszugleichen und zu beruhigen, was einen positiven Effekt auf die Verteilgenauigkeit des Verteilerturms 10 hat.

Zusätzlich wird darauf verwiesen, dass ein geringer Luftvolumenstromanteil des Verteilgut-Luftvolumenstromanteils zurück in die mindestens eine Rückführleitung 31 strömen kann, so dass über den Bypasskanal 46 ein Druckausgleich in beide Richtungen erfolgen kann.

Wahlweise kann die Rückführung des Verteilguts auch in einer dem Steigrohr 22 vorgeordneten Leitung 18 erfolgen.

### Bezugszeichenliste

- 10: Verteilerturm
- 12: Landwirtschaftliche Maschine
- 14: Vorratstank
- 16: Dosiervorrichtung.
- 18: Leitung
- 20: Gebläse
- 22: Steigrohr
- 24: Verteilerkopf
- 26: Abgang
- 28: Saatleitung
- 30: Rückführeinrichtung
- 31: Rückführleitung
- 32: Absperrmittel
- 34: Sammelbehälter
- 36: Düse
- 38: Diffusor
- 40: Wellrohr
- 42: Ringspalt
- 44: Weiche
- 46: Bypass, Bypasskanal
- 48: Element, strömungsleitendes Element
- 49: für Strömungsluft zumindest teilweise durchlässiges Element
- 49': für Strömungsluft zumindest teilweise durchlässiges Element
- 50: Lochblech
- 50': Lochblech
- 52: Umlenkkontur, gekrümmter Verlauf
- 56: Weiche
- 58: Steg
- 58': Steg

- R: Rechnereinheit

## Patentansprüche

1. Verteilerturm (10) für eine landwirtschaftliche Maschine (12) zum Ausbringen von Verteilgut, umfassend zumindest:
- ein Steigrohr (22) zum Zuführen eines Verteilgut-Luftvolumenstroms in einen sich an das Steigrohr (22) anschließenden Verteilerkopf (24),
- eine Vielzahl von Abgängen (26) am Verteilerkopf (24) zur Aufteilung des Verteilgut-Luftvolumenstroms in eine Vielzahl von Verteilgut-Luftvolumenströmen, welche Abgänge (26) sich jeweils in mindestens eine Saatleitung (28) und in mindestens eine Rückführeinrichtung (30) verzweigen,
- zumindest ein Absperrmittel (32), mittels welcher wahlweise die mindestens eine Saatleitung (28) oder die mindestens eine Rückführeinrichtung (30) absperrbar ist, so dass der Verteilgut-Luftvolumenstrom entsprechend einer Stellung des Absperrmittels (32) wahlweise in die mindestens eine Saatleitung (28) oder in die mindestens eine Rückführeinrichtung (30) geleitet ist,
- zumindest einen Bypasskanal (46), welcher die mindestens eine Saatleitung (28) und die mindestens eine Rückführeinrichtung (30) pneumatisch miteinander verbindet,
wobei dem Bypasskanal (46) zumindest an einer Einmündung in die mindestens eine Saatleitung (28) und/oder in die mindestens eine Rückführeinrichtung (30) wenigstens ein strömungsleitendes Element (48) zugeordnet ist, über welches ein Luftvolumenstromanteil vom Verteilgut-Luftvolumenstromanteil abzweigbar ist, **dadurch gekennzeichnet, dass** sich an das strömungsleitende Element (48) ein für Strömungsluft zumindest teilweise durchlässiges Element (49, 49') und/oder ein Lochblech (50, 50') anschließt, so dass der Luftvolumenstromanteil des Verteilgut-Luftvolumenstroms über eine Vielzahl an Öffnungen des für Strömungsluft zumindest teilweise durchlässigen Elementes (49, 49') und/oder des Lochblechs (50, 50') in den Bypasskanal (46) strömen kann.

2. Verteilerturm nach Anspruch 1, bei welchem das strömungsleitende Element (48) durch wenigstens einen Steg (58, 58') ausgebildet ist, wobei der Luftvolumenstromanteil des Verteilgut-Luftvolumenstroms den wenigstens einen Steg (58, 58') zumindest teilweise umströmt.

3. Verteilerturm nach Anspruch 1 oder 2, bei welchem die Öffnungen des für Strömungsluft zumindest teilweise durchlässigen Elementes (49, 49') und/oder des Lochblechs (50, 50') jeweils Größen und/oder Durchmesser von maximal 1,5 mm oder weniger aufweisen.

4. Verteilerturm nach Anspruch 2, bei welchem der wenigstens eine Steg (58, 58') und das für Strömungsluft zumindest teilweise durchlässige Element (49, 49') und/oder das Lochblech (50, 50') in einem Winkel zueinander angeordnet sind.

5. Verteilerturm nach einem der vorherigen Ansprüche, bei welchem jeweils ein für Strömungsluft zumindest teilweise durchlässiges Element (49') und/oder ein Lochblech (50') an der Einmündung des Bypasskanals (46) in die mindestens eine Saatleitung (28) und ein für Strömungsluft zumindest teilweise durchlässiges Element (49) und/oder ein Lochblech (50) an der Einmündung des Bypasses (46) in die mindestens eine Rückführleitung (31) vorgesehen sind, welche für Strömungsluft zumindest teilweise durchlässige Elemente (49, 49') und/oder Lochbleche (50, 50') zumindest weitgehend parallel oder in einem Winkel zueinander angeordnet sind.

6. Verteilerturm nach einem der vorherigen Ansprüche, bei welchem ein Druckausgleich zwischen Saatleitung (28) und Rückführeinrichtung (30) über einen im Verteilerturm (10) befindenden Luftvolumenstromanteil in beide Richtungen erfolgt, wobei bei einer geöffneten Stellung des zumindest einen Absperrmittels (32) ein geringer Luftvolumenstromanteil, welcher sich im Verteilerturm (10) befindet, über den Bypasskanal (46) in die mindestens eine Saatleitung (28) strömen kann oder wobei bei einer geschlossenen Stellung des zumindest einen Absperrmittels (32) ein geringer Luftvolumenstromanteil, welcher sich im Verteilerturm (10) befindet, über den Bypasskanal (46) in die mindestens eine Rückführeinrichtung (30) oder Rückführleitung (31) strömen kann, was jeweils für einen zusätzlichen Druckausgleich im Verteilerturm (10) sorgt.

7. Verteilerturm nach einem der vorherigen Ansprüche, bei welchem die mindestens eine Rückführeinrichtung (30) in einem Sammelbehälter (34) mündet, welcher mittels einer dem Steigrohr (22) zugeordneten Öffnung oder mittels einer dem Steigrohr (22) vorgeordneten Leitung (18) in pneumatischer Verbindung steht.

8. Verteilerturm nach einem der vorherigen Ansprüche, bei welchem das zumindest eine Absperrmittel (32) durch eine Weiche (56) oder Klappe ausgebildet ist.

9. Verteilerturm nach einem der vorherigen Ansprüche, bei welchem die mindestens eine Saatleitung (28) in Bezug auf den Abgang (26) zumindest abschnittsweise einen gekrümmten Verlauf (52) aufweist, durch welchen der abgezweigte Verteilgut-Luftvolumenstrom entlang der Längserstreckung der mindestens einen Saatleitung (28) eine Richtungsänderung erfährt.

10. Verfahren zum Betreiben einer landwirtschaftlichen Maschine (12) zum Ausbringen von Verteilgut, wobei das Verfahren zumindest die folgenden Schritte umfasst:
- Bereitstellen eines Verteilerturms (10) mit einem Steigrohr (22) und mit einem an das Steigrohr (22) anschließenden Verteilerkopf (24),
- Zuführen eines Verteilgut-Luftvolumenstroms über das Steigrohr (22) in den Verteilerkopf (24),
- Aufteilen des Verteilgut-Luftvolumenstroms in eine Vielzahl von Verteilgut-Luftvolumenströmen, wobei der Verteilgut-Luftvolumenstrom jeweils anschließend wahlweise entlang mindestens einer Saatleitung (28) oder mindestens einer Rückführeinrichtung (30) befördert wird,
- pneumatisches Verbinden der mindestens einen Saatleitung (28) und der mindestens einen Rückführeinrichtung (30) über ein Abzweigen eines Luftvolumenstromanteils des Verteilgut-Luftvolumenstroms,
wobei dem Bypasskanal (46) zumindest an einer Einmündung in die mindestens eine Saatleitung (28) und/oder in die mindestens eine Rückführeinrichtung (30) ein strömungsleitendes Element (48) zugeordnet ist, über welches ein Luftvolumenstromanteil von Verteilgut-Luftvolumenstromanteil abgezweigt wird, **dadurch gekennzeichnet, dass** sich an das strömungsleitende Element (48) ein für Strömungsluft zumindest teilweise durchlässiges Element (49, 49') und/oder ein Lochblech (50, 50') anschließt, so dass der Luftvolumenstromanteil des Verteilgut-Luftvolumenstroms über die Vielzahl an Öffnungen des für Strömungsluft zumindest teilweise durchlässigen Elementes (49, 49') und/oder des Lochblechs (50, 50') in den Bypasskanal (46) strömt.

11. Verfahren nach Anspruch 10, wobei der Luftvolumenstromanteil das strömungsleitende Element (48) zumindest teilweise umströmt.

12. Verfahren nach einem der Ansprüche 10 oder 11, bei welchem ein Druck zwischen Abgang (26), Saatleitung (28) und Rückführeinrichtung (30) über einen im Verteilerturm (10) befindenden Luftvolumenstromanteil in beide Richtungen ausgeglichen wird, wobei bei einer geöffneten Stellung des zumindest einen Absperrmittels (32) ein geringer Luftvolumenstromanteil, welcher sich im Verteilerturm (10) befindet, über den Bypasskanal (46) in die mindestens eine Saatleitung (28) strömt oder wobei bei einer geschlossenen Stellung des zumindest einen Absperrmittels (32) ein geringer Luftvolumenstromanteil, welcher sich im Verteilerturm (10) befindet, über den Bypasskanal (46) in die mindestens eine Rückführeinrichtung (30) bzw. Rückführleitung (31) strömt, was jeweils für einen zusätzlichen Druckausgleich im Verteilerturm (10) sorgt.

13. Landwirtschaftliche Maschine (12) zum Ausbringen von granulatartigem Verteilgut wie Saatgut oder Düngemittel, mit zumindest einem Verteilerturm (10) gemäß einem der Ansprüche 1 bis 9, wobei die landwirtschaftliche Maschine (12) insbesondere mit einem Verfahren gemäß einem der Ansprüche 10 bis 12 betrieben wird.

## Claims

1. A distribution tower (10) for an agricultural machine (12) for spreading distribution goods, the distribution tower (10) comprising at least:
- a riser pipe (22) for supplying an air volume flow of distribution goods into a distributor head (24) connecting to the riser pipe (22);
- a multitude of outflows (26) at the distributor head (24) for dividing the air volume flow of distribution goods into a multitude of air volume flows of distribution goods, which outflows (26) each branch into at least one seed tube (28) and into at least one return device (30);
- at least one shut-off means (32), by means of which optionally the at least one seed tube (28) or the at least one return device (30) is capable of being shut off such that the air volume flow of distribution goods is optionally guided into the at least one seed tube (28) or into the at least one return device (30) corresponding to a position of the shut-off means (32);
- at least one bypass channel (46), which pneumatically connects the at least one seed tube (28) and the at least one return device (30) to each other;
wherein the bypass channel (46) has at least one flow-guiding member (48) assigned to it at at least one junction into the at least one seed tube (28) and/or into the at least one return device (30), by way of which flow-guiding member (48) an air volume flow portion is capable of being branched off from the air volume flow portion of distribution goods, **characterised in that** a member (49, 49') that is at least partly permeable to flow air and/or a perforated plate (50, 50') connects to the flow-guiding member (48) such that the air volume flow portion of the air volume flow of distribution goods can flow into the bypass channel (46) by way of a multitude of openings of the member (49, 49') that is at least partly permeable to flow air and/or by way of the multitude of openings of the perforated plate (50, 50').

2. The distribution tower according to claim 1, in which the flow-guiding member (48) is formed by at least one ligament (58, 58'), wherein the air volume flow portion of the air volume flow of distribution goods flows at least partly around the at least one ligament (58, 58').

3. The distribution tower according to claim 1 or 2, in which the openings of the member (49, 49') that is at least partly permeable to flow air and/or the openings of the perforated plate (50, 50') each have sizes and/or diameters of a maximum of 1.5 mm or less.

4. The distribution tower according to claim 2, in which the at least one ligament (58, 58') and the member (49, 49') that is at least partly permeable to flow air and/or the perforated plate (50, 50') are disposed at an angle in relation to each other.

5. The distribution tower according to one of the previous claims, in which in each case one member (49') that is at least partly permeable to flow air and/or one perforated plate (50') is provided at the junction of the bypass channel (46) into the at least one seed tube (28), and one member (49) that is at least partly permeable to flow air and/or one perforated plate (50) is provided at the junction of the bypass (46) into the at least one return tube (31), which members (49, 49') that are at least partly permeable to flow air and/or which perforated plates (50, 50') are disposed at least largely parallel or at an angle in relation to each other.

6. The distribution tower according to one of the previous claims, in which a pressure balance between seed tube (28) and return device (30) is carried out in both directions by way of an air volume flow portion located in the distribution tower (10), wherein a small air volume flow portion located in the distribution tower (10) can flow by way of the bypass channel (46) into the at least one seed tube (28) when the at least one shut-off means (32) is in an opened position, or wherein a small air volume flow portion located in the distribution tower (10) can flow by way of the bypass channel (46) into the at least one return device (30) or return tube (31) when the at least one shut-off means (32) is in a closed position, which in each case provides for an additional pressure balance in the distribution tower (10).

7. The distribution tower according to one of the previous claims, in which the at least one return device (30) leads into a storage bin (34), which is in pneumatic communication by means of an opening assigned to the riser pipe (22) or by means of a tube (18) disposed upstream from the riser pipe (22).

8. The distribution tower according to one of the previous claims, in which the at least one shut-off means (32) is formed by a track switch (56) or a flap.

9. The distribution tower according to one of the previous claims, in which the at least one seed tube (28) has a run (52) that is at least in some sections curved in relation to the outflow (26), through which run (52) the branched-off air volume flow of distribution goods undergoes a change of direction along the longitudinal extension of the at least one seed tube (28).

10. A method for operating an agricultural machine (12) for spreading distribution goods, wherein the method comprises at least the following steps:
- providing a distribution tower (10) with a riser pipe (22) and with a distributor head (24) connecting to the riser pipe (22);
- supplying an air volume flow of distribution goods into the distributor head (24) by way of the riser pipe (22);
- dividing the air volume flow of distribution goods into a multitude of air volume flows of distribution goods, wherein the air volume flow of distribution goods is subsequently conveyed in each case optionally along at least one seed tube (28) or along at least one return device (30);
- pneumatic connecting of the at least one seed tube (28) and the at least one return device (30) by branching off an air volume flow portion of the air volume flow of distribution goods,
wherein the bypass channel (46) has a flow-guiding member (48) assigned to it at at least one junction into the at least one seed tube (28) and/or into the at least one return device (30), by way of which flow-guiding member (48) an air volume flow portion is branched off from the air volume flow portion of distribution goods, **characterised in that** a member (49, 49') that is at least partly permeable to flow air and/or a perforated plate (50, 50') connects to the flow-guiding member (48) such that the air volume flow portion of the air volume flow of distribution goods flows into the bypass channel (46) by way of the multitude of openings of the member (49, 49') that is at least partly permeable to flow air and/or by way of the multitude of openings of the perforated plate (50, 50').

11. The method according to claim 10, wherein the air volume flow portion flows at least partly around the flow-guiding member (48).

12. The method according to one of the claims 10 or 11, in which a pressure between outflow (26), seed tube (28), and return device (30) is balanced in both directions by way of an air volume flow portion located in the distribution tower (10), wherein a small air volume flow portion located in the distribution tower (10) flows by way of the bypass channel (46) into the at least one seed tube (28) when the at least one shut-off means (32) is in an opened position, or wherein a small air volume flow portion located in the distribution tower (10) flows by way of the bypass channel (46) into the at least one return device (30) or return tube (31), as applicable, when the at least one shut-off means (32) is in a closed position, which in each case provides for an additional pressure balance in the distribution tower (10).

13. An agricultural machine (12) for spreading granular-type distribution goods, such as seeds or fertilisers, with at least one distribution tower (10) according to one of the claims 1 to 9, wherein the agricultural machine (12) is operated, in particular, with a method according to one of the claims 10 to 12.

## Revendications

1. Tour de distribution (10) pour une machine agricole (12), destinée à épandre du matériau d'épandage, comprenant au moins :
- un tuyau montant (22) destiné à introduire un débit volumique d'air de matériau d'épandage dans une tête de distribution (24) branchée audit tuyau montant (22),
- une pluralité de sorties (26) au niveau de la tête de distribution (24) destinées à répartir le débit volumique d'air de matériau d'épandage dans une pluralité de débits volumiques d'air de matériau d'épandage, lesquelles sorties (26) se ramifient respectivement en au moins une conduite pour semence (28) et en au moins un dispositif de refoulement (30),
- au moins un moyen de blocage (32) permettant au choix de bloquer l'au moins une conduite pour semence (28) ou l'au moins un dispositif de refoulement (30), de sorte que le débit volumique d'air de matériau d'épandage est dirigé, en fonction d'une position du moyen de blocage (32), au choix dans l'au moins une conduite pour semence (28) ou dans l'au moins un dispositif de refoulement (30),
- au moins un canal de dérivation (46) qui relie l'un à l'autre de manière pneumatique l'au moins une conduite pour semence (28) et l'au moins un dispositif de refoulement (30),
au moins un élément de guidage de flux (48) étant associé au canal de dérivation (46) au moins à un embranchement dans l'au moins une conduite pour semence (28) et/ou dans l'au moins un dispositif de refoulement (30), par le biais duquel élément de guidage une part de débit volumique d'air peut être déviée de la part de débit volumique d'air de matériau d'épandage, **caractérisé en ce qu'**est branché à l'élément de guidage de flux (48) un élément (49, 49') au moins partiellement perméable à l'air circulant et/ou une tôle perforée (50, 50'), de sorte que la part de débit volumique d'air du débit volumique d'air de matériau d'épandage peut circuler dans le canal de dérivation (46) par une pluralité d'ouvertures de l'élément (49, 49') au moins partiellement perméable à l'air circulant et/ou de la tôle perforée (50, 50').

2. Tour de distribution selon la revendication 1, dans laquelle ledit élément de guidage de flux (48) est constitué d'au moins une bride (58, 58'), la part de débit volumique d'air du débit volumique d'air de matériau d'épandage circulant au moins partiellement autour de l'au moins une bride (58, 58').

3. Tour de distribution selon la revendication 1 ou 2, dans laquelle les ouvertures de l'élément (49, 49') au moins partiellement perméable à l'air circulant et/ou de la tôle perforée (50, 50') présentent respectivement des tailles et/ou diamètres de maximum 1,5 mm ou moins.

4. Tour de distribution selon la revendication 2, dans laquelle l'au moins une bride (58, 58') et l'élément (49, 49') au moins partiellement perméable à l'air circulant et/ou la tôle perforée (50, 50') sont agencés dans un certain angle les uns par rapport aux autres.

5. Tour de distribution selon l'une quelconque des revendications précédentes, dans laquelle sont prévus respectivement un élément (49') au moins partiellement perméable à l'air circulant et/ou une tôle perforée (50') à l'embranchement du canal de dérivation (46) dans l'au moins une conduite pour semence (28) et un élément (49) au moins partiellement perméable à l'air circulant et/ou une tôle perforée (50) à l'embranchement du canal de dérivation (46) dans l'au moins une conduite de refoulement (31), lesdits éléments (49, 49') partiellement perméables à l'air circulant et/ou tôles perforées (50, 50') sont agencés au moins largement parallèles ou dans un certain angle les uns par rapport aux autres.

6. Tour de distribution selon l'une quelconque des revendications précédentes, dans laquelle une compensation de pression entre la conduite pour semence (28) et le dispositif de refoulement (30) s'effectue dans les deux sens par le biais d'une part de débit volumique d'air se trouvant dans la tour de distribution (10), dans une position ouverte de l'au moins un moyen de blocage (32), une faible part de débit volumique d'air qui se trouve dans la tour de distribution (10) pouvant circuler par le canal de dérivation (46) dans l'au moins une conduite pour semence (28) ou, en position fermée de l'au moins un moyen de blocage (32), une faible part de débit volumique d'air qui se trouve dans la tour de distribution (10) pouvant circuler par le canal de dérivation (46) dans l'au moins un dispositif de refoulement (30) ou dans l'au moins une conduite de refoulement (31), ce qui provoque à chaque fois une compensation de pression supplémentaire dans la tour de distribution (10).

7. Tour de distribution selon l'une quelconque des revendications précédentes, dans laquelle l'au moins un dispositif de refoulement (30) débouche dans un récipient de rétention (34) qui est en liaison pneumatique grâce à une ouverture associée au tuyau montant (22) ou grâce à une conduite (18) agencée en amont du tuyau montant (22).

8. Tour de distribution selon l'une quelconque des revendications précédentes, dans laquelle l'au moins un moyen de blocage (32) est constitué d'une plaque de bifurcation (56) ou d'un clapet.

9. Tour de distribution selon l'une quelconque des revendications précédentes, dans laquelle l'au moins une conduite pour semence (28) présente, quant à la sortie (26), au moins partiellement une trajectoire courbe (52) par le biais de laquelle le débit volumique d'air de matériau d'épandage détourné subit un changement de direction le long de l'étirement en longueur de l'au moins une conduite pour semence (28).

10. Procédé destiné à l'exploitation d'une machine agricole (12) destinée à l'épandage de matériau d'épandage, ledit procédé comprenant au moins les étapes suivantes :
- fourniture d'une tour de distribution (10) dotée d'un tuyau montant (22) et d'une tête de distribution (24) branchée audit tuyau montant (22),
- introduction d'un débit volumique d'air de matériau d'épandage dans la tête de distribution (24) par le biais du tuyau montant (22),
- répartition du débit volumique d'air de matériau d'épandage dans une pluralité de débits volumiques d'air de matériau d'épandage, le débit volumique d'air de matériau d'épandage étant ensuite transporté respectivement au choix le long d'au moins une conduite pour semence (28) ou d'au moins un dispositif de refoulement (30),
- liaison pneumatique de l'au moins une conduite pour semence (28) et de l'au moins un dispositif de refoulement (30) par le biais d'une dérivation d'une part de débit volumique d'air du débit volumique d'air de matériau d'épandage,
un élément de guidage de flux (48) étant associé au canal de dérivation (46) au moins à un embranchement dans l'au moins une conduite pour semence (28) et/ou dans l'au moins un dispositif de refoulement (30), élément par le biais duquel une part de débit volumique d'air est déviée de la part de débit volumique d'air de matériau d'épandage, **caractérisé en ce qu'**est branché à l'élément de guidage de flux (48) un élément (49, 49') au moins partiellement perméable à l'air circulant et/ou une tôle perforée (50, 50'), de sorte que la part de débit volumique d'air du débit volumique d'air de matériau d'épandage circule dans le canal de dérivation (46) par une pluralité d'ouvertures de l'élément (49, 49') au moins partiellement perméable à l'air circulant et/ou de la tôle perforée (50, 50').

11. Procédé selon la revendication 10, la part de débit volumique d'air circulant au moins partiellement autour de l'élément (48) de guidage de flux.

12. Procédé selon l'une quelconque des revendications 10 ou 11, dans laquelle il y a compensation de pression dans les deux sens entre la sortie (26), la conduite pour semence (28) et le dispositif de refoulement (30) par le biais d'une part de débit volumique d'air se trouvant dans la tour de distribution (10), dans une position ouverte de l'au moins un moyen de blocage (32), une faible part de débit volumique d'air qui se trouve dans la tour de distribution (10) circulant par le canal de dérivation (46) dans l'au moins une conduite de dérivation (28) ou, en position fermée de l'au moins un moyen de blocage (32), une faible part de débit volumique d'air qui se trouve dans la tour de distribution (10) circulant par le canal de dérivation (46) dans l'au moins un dispositif de refoulement (30) ou dans l'au moins une conduite de refoulement (31), ce qui provoque à chaque fois une compensation de pression supplémentaire dans la tour de distribution (10).

13. Machine agricole (12) destinée à l'épandage de matériau d'épandage sous forme de granulés, tel que semences ou engrais, dotée d'au moins une tour de distribution (10) selon l'une quelconque des revendications 1 à 9, la machine agricole (12) étant exploitée au moyen d'un procédé selon l'une quelconque des revendications 10 à 12.
